# EUROPÄISCHE PATENTANMELDUNG

(11) **EP 1 647 526 A1**
(43) Veröffentlichungstag der Anmeldung: **19.04.2006**
(21) Anmeldenummer: 05022270.2
(22) Anmeldetag: 12.10.2005
(51) Int. Cl.: C02F 1/48

(54) **Vorrichtung zur Behandlung trinkbarer Flüssigkeiten, Verfahren zur Behandlung trinkbarer Flüssigkeiten und Heilmittel, insbesondere zur Behandlung von Krebs**

(30) Priorität: 12.10.2004 DE 102004049687; 26.01.2005 DE 102005003688
(71) Anmelder: Schuster, Michael, 81675 München (DE)
(72) Erfinder: Schuster, Dietrich, Dr., 83209 Prien/Chiemsee (DE); Schuster, Michael, 81675 München (DE)
(74) Vertreter: Friese, Martin

(57) **Zusammenfassung**

Die Erfindung betrifft eine Vorrichtung zur Behandlung von Getränken mit einer magnetisierten Grundplatte (1), einer darüber angeordneten Isolierschicht (2), einer elektrisch leitenden Schicht (3), einer darüber angeordneten Kristall- oder Gesteinsplatte (4) und einer darüber angeordneten elektrisch leitenden Anordnung (5) zur Aufnahme eines Flüssigkeitsgefäßes, wobei die magnetisierte Grundplatte (1) und die elektrisch leitende Anordnung (5) miteinander elektrisch - leitend verbunden sind.

## Beschreibung

Die vorliegende Erfindung betrifft eine Vorrichtung zur Behandlung trinkbarer Flüssigkeiten und ein Verfahren zur Behandlung trinkbarer Flüssigkeiten, insbesondere von Trinkwasser. Des Weiteren betrifft die vorliegende Erfindung die erfindungsgemäß behandelte trinkbare Flüssigkeit und ein Heilmittel bzw. die Verwendung der trinkbare Flüssigkeit zur Herstellung eines Heilmittels bzw. zur Bewässerung von Pflanzen.

Der Erfindung liegt die Aufgabe zugrunde, eine Vorrichtung und ein Verfahren zur Behandlung trinkbarer Flüssigkeiten anzugeben, die bzw. das die trinkbare Flüssigkeit für den menschlichen Körper besser zuträglich macht. Beispielsweise hat die Erfindung das Ziel, normales Leitungswasser durch die erfindungsgemäße Behandlung mit natüröichen Quellwasser vergleichbar zu machen, das innerhalb langer Zeiträume, die bis zu tausend von Jahren betragen können, durch engste Spalte und Kavernen in der Erdoberfläche absteigt, um schließlich von dort wieder an die Oberfläche zu gelangen, wobei es häufig in unmittelbarer Umgebung von Kristall- oder Gesteinsplatten war und dadurch kosmisch biologisch positiv beeinflußt wurde.

Diese Aufgabe der Erfindung wird mit den Merkmalen von Anspruch 1 bzw. Anspruch 32 gelöst. Vorteilhafte Ausgestaltungen der Erfindung sind in den abhängigen Ansprüchen angegeben.

Bei Versuchen der Erfinder hat sich überraschenderweise herausgestellt, daß sich beim Einsatz der erfindungsgemäßen Vorrichtungen und Verfahren eine Änderung der Schwere der behandelten trinkbaren Flüssigkeit beobachten läßt. Das gleiche Phänomen läßt sich beobachten, wenn eine behandelte trinkbare Flüssigkeit mit unbehandelter trinkbarer Flüssigkeit in Kontakt gebracht wird. Die Erfinder sind der Auffassung, daß sich diese überraschenden aber reproduzierbaren Versuchsergebnisse dadurch erklären lassen, daß die erfindungsgemäßen Vorrichtungen und Verfahren zumindest einen Teil der Energie von Wellen empfangen, senden und/oder speichern können, die einen Einfluß auf die Schwere der beanspruchten Flüssigkeiten haben. Derartige äußerst überraschende Effekte sind vergleichbar mit den bereits in der früheren Patentanmeldung DE 103 54 019 A1 des Anmelders beobachteten und beschriebenen Effekten mit dem Titel "Vorrichtung zum Empfangen, Senden und/oder Speichern zumindest eines Anteils der Energie von Wellen" deren gesamter Inhalt hier durch Bezugnahme aufgenommen werden soll.

Die bekannten in der Onkologie verwendeten Krebsheilmittel haben generell eine hohe Mortabilitätsrate zur Folge und sind zwischenzeitlich auch in der Statistik der Krebsheilungen nicht mehr als erfolgreich ausgewiesen. Es besteht daher ein erheblicher Bedarf, verträgliche und besser wirksame Substanzen als Heilmittel für Krebs anzugeben.

Der Erfindung liegt daher auch die Aufgabe zugrunde, ein gut verträgliches und besser wirksames Heilmittel, insbesondere zur Behandlung von Krebs, anzugeben.

Diese Aufgabe der Erfindung wird mit den Merkmalen von Anspruch 35 und Anspruch 41 gelöst. Vorteilhafte Ausgestaltungen der Erfindung sind in den abhängigen Ansprüchen angegeben.

Die vorliegende Erfindung betrifft somit auch ein Heilmittel, das die erfindungsgemäß behandelte trinkbare Flüssigkeit umfaßt.

Das erfindungsgemäße Heilmittel kann sowohl beim Menschen als auch bei Tieren angewendet werden und zeigt überraschend gute Heilwirkungen. Es kann auch vorbeugend eingesetzt werden. Da es aus reinen Naturbestandsteilen besteht kann auch keine Überdosierung erfolgen und sollten keine Nebenwirkungen eintreten.

Beide Grundbestandeteile, d.h. die erfindungsgemäß behandelte trinkbare Flüssigkeit (z.B. Wasser) und Naturfarbstoff (z.B. Chlorophyll) sind Grundlagen des Lebens. Die Erfinder sind der Auffassung, daß die erfindungsgemäß behandelte Flüssigkeit angeregt ist und damit auch den Naturfarbstoff anregen kann. Die Heilwirkung von dem Naturfarbstoff Chlorophyll bei der Krebsbehandlung ist bekannt. Durch die Kombination der erfindungsgemäß behandelten trinkbaren Flüssigkeit mit dem Naturfarbstoff ergibt sich die überraschend starke Heilwirkung des erfindungsgemäßen Heilmittels. Die Erfinder sind der Auffassung, daß sich diese verstärkte Heilwirkung des Naturfarbstoffs eine Folge seiner biologischen Aktivierung durch die erfindungsgemäß behandelten trinkbaren Flüssigkeit ergibt.

Gegenüber den bekannten Krebsheilmitteln, die bekanntermaßen derart hohe Nebenwirkungen haben, daß sich viele Erkrankte dazu entschließen, keine Behandlung machen zu lassen, hat das erfindungsgemäße Heilmittel erhebliche Vorteile, weil es eine hohe Wirkung ohne nachweisbare Nebenwirkungen aufweist.

Chlorophyll ist der grüne Blattfarbstoff und spielt als Farbstoffpigmnet bei der Photosynthese eine entscheidende Rolle. Bei der Photosynthese wird die Sonnenenergie in von der Flora und Fauna verwertbare chemische Energieformen umgewandelt. Natürlich vorkommendes Chlorophyll ist ein Gemenge von zwei Arten, welche noch in jeweils zwei Unterarten aufgeteilt sind. Daneben gibt es auch industriell gewonnenes Chlorophyll, das eine dieser Unterarten in reiner Form umfassen kann. In dieser Anmeldung soll der Begriff Chlorophyll sowohl natürlich vorkommendes Chlorophyll als auch das industriell gewonnene Chlorophyll umfassen, wobei das natürlich vorkommende bevorzugt wird.

Erfindungsgemäße Heilmittel können beispielsweise hergestellt werden, indem man zunächst einen Chlorophyllextrakt aus Spinatblättern oder Brennesseln herstellt. Es ist klar, daß alternativ oder zusätzlich auch andere chlorophyllhaltige Pflanzen verwendet werden können. Die Pflanzen werden unter Zugabe von Wasser zerkleinert, mit Aceton extrahiert und nach Filtration über Quarzmehl und Schlämmkreide in eine dunkle Flasche überführt. Anschließend wird das Aceton verdampft und dem Extrakt Wasser zugefügt. Dabei kann das zugegebene Wasser bereits mit einer erfindungsgemäßen Vorrichtung behandelt worden sein (wobei eine Gewichtsreduzierung erfolgt). Alternativ oder zusätzlich kann ein Zwischenprodukt oder das Endprodukt mit der erfindungsgemäßen Vorrichtung behandelt werden.

Schonender bzw. naturbelassener läßt sich ein erfindungsgemäßes Heilmittel herstellen, indem chlorophyllhaltige Planzenmasse, z.B. Spinat, zerkleinert und mit Wasser versetzt wird. Die Behandlung (bzw. Anregung) des Wassers kann wie oben vor und/oder nach der Zerkleinerung der Pflanzenmasse bzw. der Zugabe des Wassers erfolgen.

Alternativ kann auch getrocknete oder gemahlene Pflanzenmasse mit beispielsweise 80%-igen Aceton extrahiert werden und dann das gewonnene Chlorophyll verschiedenen Reinigungsverfahren unterworfen werden, um es möglichst rein zu gewinnen. Es ist klar, daß das Chlorophyll auch ein industriell hergestelltes Chlorophyll sein kann, das im Arzneimittelgeschäften bezogen werden kann. Das Chlorophyll wird wieder mit Wasser versetzt. Die Anregung des Wassers kann wie oben vor und/oder nach der Zerkleinerung der Zugabe des Wassers erfolgen.

Die erfindungsgemäße trinkbare Flüssigkeit kann überraschenderweise auch vorteilhaft zur Bewässerung von Pflanzen eingesetzt werden. Dabei zeigt sich im Vergleich mit der Bewässerung mit normalen Leitungswassser ein stärkerer und gesünderer Austrieb bei einer geringeren Wurzelbildung. Die Erfinder sind der Auffassung, daß dieser positive Effekt auf einer biologischen Aktivierung der Pflanzen beruht.

Die Erfindung wird im folgenden anhand der in den Figuren gezeigten Ausführungsbeispiele genauer beschrieben.
- Fig. 1: zeigt eine erfindungsgemäße Vorrichtung zur Behandlung von einer trinkbaren Flüssigkeit gemäß einer ersten Ausführung der Erfindung.
- Fig. 2: zeigt eine erfindungsgemäße Vorrichtung zur Behandlung von einer trinkbaren Flüssigkeit gemäß einer weiteren Ausführung der Erfindung.
- Fig. 3: zeigt eine Kurve des zeitlichen Verlaufs der Änderung der Schwere der behandelten trinkbaren Flüssigkeit nach erfolgter Behandlung in einer Vorrichtung bzw. Anordnung gemäß Fig. 1.
- Fig. 3a: zeigt eine weitere Kurve des zeitlichen Verlaufs der Änderung der Schwere der behandelten trinkbaren Flüssigkeit nach erfolgter Behandlung in einer Vorrichtung bzw. Anordnung gemäß Fig. 1.
- Fig. 3b: zeigt eine weitere Kurve des zeitlichen Verlaufs der Änderung der Schwere der behandelten trinkbaren Flüssigkeit nach erfolgter Behandlung in einer Vorrichtung bzw. Anordnung gemäß Fig. 1.
- Fig. 3c: zeigt eine weitere Kurve des zeitlichen Verlaufs der Änderung der Schwere einer Vorrichtung gemäß Fig. 1.
- Fig. 4: zeigt das Ergebnis eines Vergleichsversuchs für eine Aussaat von Radieschen in Quarzsand.
- Fig. 5: zeigt das Ergebnis eines Vergleichsversuchs mit Linsen aus einem Bioladen (lens culinaris), die entsprechend dem in Fig. 4 gezeigten Versuch ausgesät wurden.
- Fig. 6a: zeigt das Ergebnis eines Vergleichsversuchs mit Bambuspflanzen.
- Fig. 6b: zeigt eine vergrößerte Teilansicht des Wurzelbereichs des in Fig. 6a gezeigten Versuchsergebnisses.
- Fig. 7: zeigt das Ergebnis eines Vergleichsversuchs mit zwei Paaren aus jeweils einer rosa und einer blauen Hyazinthe.

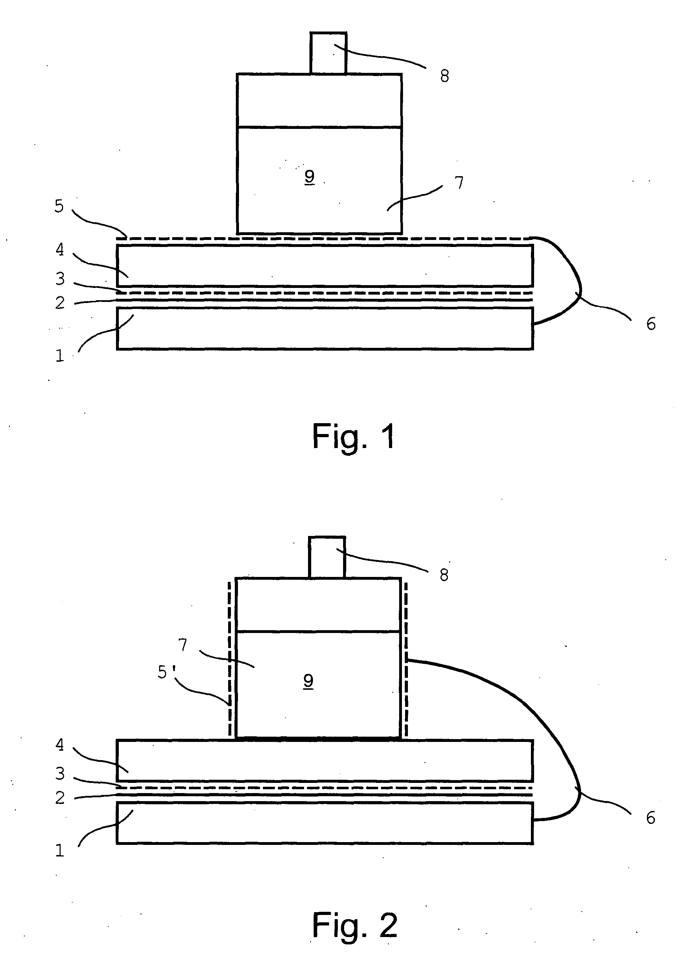

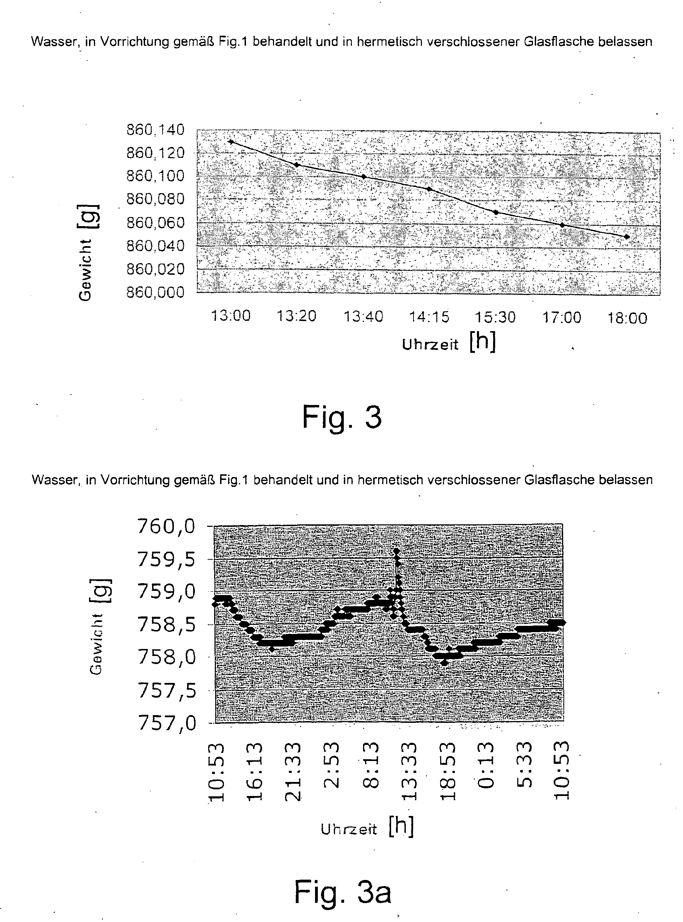

Fig. 1 zeigt eine erfindungsgemäße Vorrichtung zur Behandlung von einer trinkbaren Flüssigkeit gemäß einer ersten Ausführung der Erfindung. Die Vorrichtung weist eine magnetisierte Grundplatte 1 auf, auf der eine Isolierschicht 2 aufgetragen ist. Über der Isolierschicht 2 ist eine elektrisch leitende Schicht 3 in Form eines Kupfergewebes angeordnet. Auf dem Kupfergewebe liegt eine Kristallplatte 4 auf. Über der Kristallplatte 4 ist eine elektrisch leitende Anordnung 5 angeordnet, auf der ein Gefäß 7 zur Aufnahme der trinkbaren Flüssigkeit 9 steht, die zu behandeln ist. Die elektrisch leitende Anordnung 5 ist über ein Kupferkabel mit 1 mm Querschnitt mit der magnetisierten Grundplatte verbunden.

Die magnetisierte Grundplatte 1 besteht bei dem dargestellten Ausführungsbeispiel aus einer 10 x 10 cm großen Eisenplatte, die 1 cm stark ist. In die Platte sind 2 Dauermagnete im Abstand von beispielsweise 3 bis 7 cm eingearbeitet.

Die Isolierschicht ist eine 0,1 mm starke Polyethylenfolie, die auf die Oberseite und die Seitenwände der Eisenplatte aufgetragen ist. Das Kupfergewebe ist 10 x 10 cm groß und hat eine Dicke von 0,2 mm. Die Maschenweite beträgt 1 mm.

Die Kristallplatte 4 ist bei dem Ausführungsbeispiel ein indischer Granit in rosa mit schwarzen Einsprenklungen. Die Fläche beträgt ca. 12 x 12 cm und die Dicke ungefähr 30 mm. Auf der Kristallplatte ist als elektrisch leitende Anordnung ein Kupfergewebe angeordnet, das im Wesentlichen dem Kupfergewebe der elektrisch leitenden Schicht 3 entspricht. Die elektrisch leitende Anordnung 5 ist über ein Kupferkabel mit 1 mm Querschnitt mit einer Isolierung mit der magnetisierten Grundplatte 1 verbunden.

Das Gefäß 7 zur Aufnahme der trinkbaren Flüssigkeit 9 hat eine Höhe von beispielweise 150 mm bis 190 mm, eine Wandstärke von 2,5 mm bzw. 3,2 bis 6 mm. Das Gefäß besteht aus einem mundgeblasenen Klarglas und weist vorzugsweise einen planen bzw. geschliffenen Boden auf, um einen guten Kontakt mit der Kristallplatte zu bieten. Bei Versuchen der Erfinder hat sich herausgestellt, daß Plastikflaschen auch funktionieren, aber der Effekt langsamer sichtbar wird. Als Material für die Flaschen kann neben normalen Flaschenglas Borosilikatglas verwendet werden. Die Flaschenform kann zylindrisch oder gebaucht, vasenförmig, gedreht und gebaucht sowie auch eckig sein. Es liegt auch im Vermögen des Fachmanns, andere geeignete Formen zu finden.

Fig. 2 zeigt eine alternative Vorrichtung der Erfindung, die im wesentlichen der in Fig. 1 gezeigten Vorrichtung entspricht. Gleiche Bezugszeichen werden für sich entsprechende Teile verwendet und auf deren Beschreibung im Zusammenhang mit der Vorrichtung von Fig. 1 verwiesen.

Die Vorrichtung von Fig. 2 unterscheidet sich von der in Fig. 1 gezeigten Vorrichtung im wesentlichen durch die Ausbildung der elektrisch leitenden Anordnung 5 (Fig. 1) bzw. 5' (Fig. 2). Die elektrisch leitende Anordnung 5' umfaßt eine Hülle aus Kupfergewebe, die das Gefäß 7 einschließt. Durch diese Anordung läßt sich der unten beschriebene Effekt der Gewichtsveränderung der behandelten Flüssigkeit beschleunigen.

Folgende Versuche wurde von den Erfindern durchgeführt: Das Gefäß 7 zur Aufnahme der trinkbaren Flüssigkeit 9 wurde bei dem Versuch mit trinkbarer Flüssigkeit befüllt und gasdicht verschlossen. Anschließend wurde das Gefäß mit Inhalt für 5,5 Stunden auf der erfindungsgemäßen Vorrichtung gemäß Fig. 1 angeordnet. Luftdruck und Temperatur waren während dieser Zeit konstant: 20°C bzw. 1025 mbar.

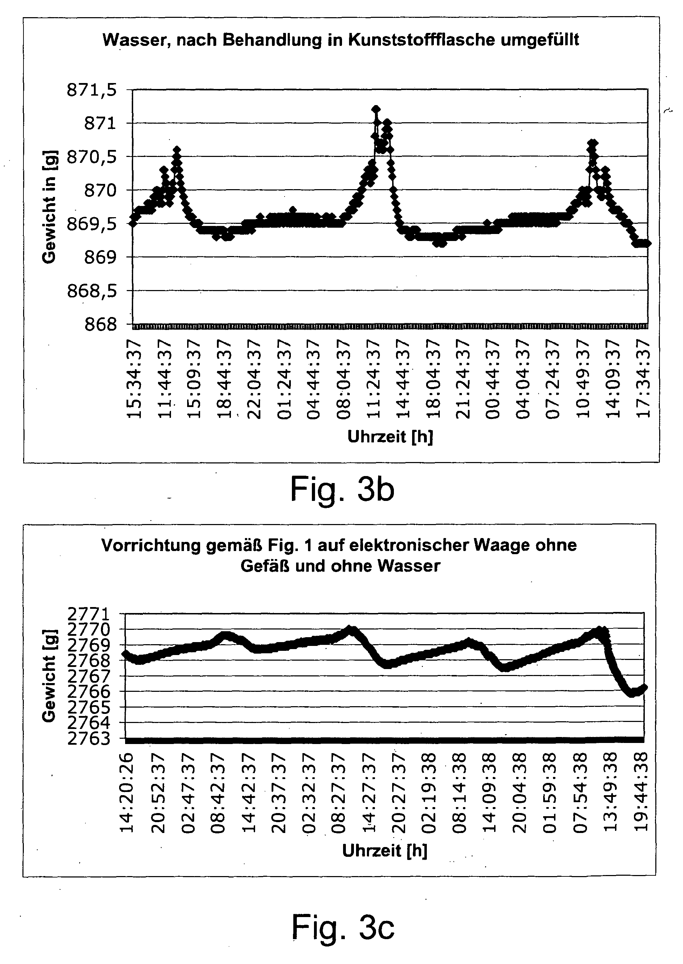

Fig. 3 zeigt eine beispielhafte Messung, die von den Erfindern durchgeführt wurde. In Fig. 3 ist das Gewicht der Flasche mit Inhalt (Wasser) über die Zeit aufgetragen. Das Gewicht von dem Gefäß einschließlich Inhalt betrug bei Versuchsbeginn 860,130 g. Am Ende des Versuchs betrug das Gewicht nur noch 860,050 g. Die Gewichtsabnahme betrug während der Versuchsdauer -80 mg. Der Versuch wurde nach der letzten Messung abgebrochen.

Bei den Versuchen hat sich überraschenderweise herausgestellt, daß durch die erfindungsgemäße Behandlung von Wasser als trinkbare Flüssigkeit sich das Gewicht der trinkbaren Flüssigkeit änderte. Es zeigte sich, daß pro halben Liter Wasser eine Gewichtsreduzierung in der Größenordnung von 50 bis 180 mg beobachtet werden konnte. Die Messung erfolgte auf einer Waage mit einer Genauigkeit von 1 mg. Die Ergebnisse waren reproduzierbar. Ähnliche Messwerte wurden mit einer Vorrichtung gemäß Fig. 2.erreicht.

Überraschenderweise hat sich herausgestellt, daß derartig behandeltes Wasser auch in der Lage war, durch Beimischen weiteren Wassers ein ähnliches Verhalten auf das zugegebene Wasser zu übertragen.

Fig. 3a zeigt eine weitere Kurve des zeitlichen Verlaufs der Änderung der Schwere der behandelten trinkbaren Flüssigkeit nach erfolgter Behandlung in einer Anordnung gemäß Fig. 1. Dabei ist das Gewicht des hermetisch verschlossenen und mit dem behandelten Wasser gefüllten Gefäßes (Y-Achse) über der Zeit (X-Achse) aufgetragen. Die Messung wurde automatisch computergesteuert durchgeführt. Alle 5 Minuten wurde ein Messwert gespeichert.

Anhand des Kurvenverlaufs von Fig. 3a erkennt man, daß die Änderung der Schwere offensichtlich vom der Drehung der Erde bezüglich der Sonne beeinflußt wird. Es sind deutliche Minima etwa bei Sonnenuntergang zu erkennen, während Maxima etwa beim höchsten Sonnenstand auftreten. Die Amplitude der regelmäßigen Änderungen im Verlauf eines Tages beträgt ungefähr 800 mg und liegt somit deutlich über der Messgenauigkeit der verwendeten elektronischen Waage, die in dem Messbereich mindestens 1 mg beträgt.

Kurvenverläufe wie in Fig. 3a werden von den Erfindern bei behandelten Flüssigkeiten immer wieder beobachtet. Der regelmäßige Kurvenverlauf konnte über den Verlauf mehrerer Tage und Wochen beobachtet werden.

Fig. 3b zeigt einen Kurvenverlauf für Wasser in einer Kunststoffflasche. Das Wasser wurde nach der Behandlung mit einer Vorrichtung gemäß Fig. 1 in eine Plastikflasche umgefüllt, die daraufhin hermetisch verschlossen wurde. Da die Erfinder der Auffassung sind, daß die Plastikflasche im Gegensatz zu einer Glasflasche nicht durch die Vorrichtung erregt werden kann, dürfte der gezeigte Kurvenverlauf allein auf das behandelte Wasser zurückzuführen sein.

In der Kurve von Fig. 3b sind wieder deutliche Maxima zur Zeit etwa des höchsten Sonnenstands zu beobachten. Die Amplitude der im Tagesverlauf auftretenden regelmäßigen Änderungen des das Gewicht anzeigenden Messwerts der elektronischen Waage beträgt ca. 1 g und liegt somit deutlich über der oben geannten Messgenauigkeit.

Da die Erfinder vermuten, daß sich infolge der Behandlung des Wassers mit einer erfindungsgemäßen Vorrichtung eine Strukturänderung im Wasser stattfindet, wurde vermutet, daß sich sowohl die elektrische Leitfähigkeit des Wassers als auch sein pH-Wert ändert. Messungen im hermetisch geschlossenen Gefäß mit sehr genauen pH-Indikatorstäbchen wurden durchgeführt, die nicht bluten. Es wurde von den Erfindern festgestellt, daß der pH-Wert von 7,5 um 0,2 Einheiten auf 7,3 abfällt. Leitfähigkeitsmessungen ergaben entsprechende Änderungen der gemessenen Werte.

Untersuchungen der Erfinder haben ergeben, daß eine Abschirmung gegenüber elektromagnetischen Wellen wie beispielsweise durch einen Faradayschen Käfig keine Auswirkung auf den Kurvenverlauf hat. Bei der Vielzahl der von den Erfindern durchgeführten Messungen hat sich aber gezeigt, daß durch starke Wolkenbildung und durch starken Regen eine schwache Beeinflussung des Verlaufs der Kurven beobachtbar ist.

Fig. 3c zeigt eine Kurve der über den Verlauf von 4 Tagen aufgenommenen Meßwerte einer elektronischen Waage, auf der die Vorrichtung gemäß Fig. 1 ohne Gefäß und Flüssigkeit angeordnet war. Es zeigt sich, daß auch die Vorrichtung selber eine Änderung der Schwere erfährt. Die Amplitude der Schwereänderung der Vorrichtung von Fig. 1 beträgt dabei von Maximum zu Minimum ungefähr 2 g.

Im folgenden werden Beispiele zur Herstellung erfindungsgemäßer Heilmittel aufgeführt (Bei allen Beispielen kann die Behandlung (bzw. Anregung) vor und/oder nach der Zerkleinerung der Pflanzenmasse bzw. der Zugabe des Wassers erfolgen):

### Beispiel 1:

250 g Blattspinat werden gedünstet und mit einem Turbomischer (Braun Miniprimer Compact MR300) zerkleinert, so daß ein feiner Brei entsteht. 1000 g Leitungswasser des süddeutschen Alpenraums (Prien, Chiemsee) mit einem deutschen Härtegrad von ungefähr 12° werden, vorzugsweise vorher, mehrere Stunden lang mit einer erfindungegemäßen Vorrichtung beispielsweise gemäß Fig. 1 oder Fig. 2 behandelt, wobei sich in dem hermetisch verschlossenen Glasgefäß eine Verminderung des Gewichts von 100 bis 440 mg ergibt. Beispielsweise ergab sich bei von den Erfindern durchgeführten Versuchen mit einer Behandlungsdauer von 6 Stunden eine Gewichtsreduzierung von 440 mg. Dieses derart behandelte Wasser wird zum Verdünnen des Blattspinatbreis verwendet. Der verdünnte Blattspinatbrei wird noch einmal mit dem Turbomischer durchgerührt, so daß sich eine gut flüssige dunkelgrün gefärbte Flüssigkeit bildet.

Das so hergestellte Getränk stellt ein Heilwasser hoher Wirksamkeit dar und kann frisch hergestellt beispielsweise über einen Tag verteilt getrunken werden.

Es hat sich überraschenderweise herausgestellt, daß sich mit diesem Heilwasser bei mehrfacher täglicher Anwendung eine Krebserkrankung aufhalten und zumindest teilweise heilen läßt.

### Beispiel 2:

250 g Blattspinat werden gedünstet und mit einem Turbomischer (Braun Miniprimer Compact MR300) zerkleinert, so daß ein feiner Brei entsteht. Anschließend werden 1000 g normales Leitungswasser mit einem deutschen Härtegrad von ungefähr 12° hinzugefügt. Danach wird die Mischung mit dem Turbomischer nochmal gerührt, so daß sich eine gut flüssige dunkelgrün gefärbte Flüssigkeit bildet. Diese wird in einen Behälter mit geschliffener Öffnung eingefüllt, der 1,2 1 Inhalt aufweist. Mittels des gefetteten Schliffs wird der Behälter hermetisch verschlossen. In dieser Form verbleibt die Mischung mindestens über einen Zeitraum von zwei Stunden auf einer erfindungsgemäßen Vorrichtung beispielsweise gemäß Fig. 1 oder Fig. 2. Dabei wurde bei Versuchen der Erfinder eine Gewichtsveränderung von ungefähr -300 mg beobachtet.

Das so hergestellte Getränk stellt ein Heilwasser hoher Wirksamkeit dar und kann beispielsweise mehrfach am Tag angewendet werden.

Die Heilwirkungen des Heilmittels gemäß Beispiel 2 entsprechen den in Beispiel 1 genannten Heilwirkungen.

### Beispiel 3:

250 g Blattspinat werden frisch gedünstet und mit einem Turbomischer (Braun Miniprimer Compact MR300) zerkleinert, wobei ein feiner Brei entsteht. Anschließend werden 10 g reines mikrokristallines Chlorophyll, das im Arzneimittelhandel erhältlich ist, hinzugefügt, und zusammen mit dem Turbomischer behandelt, bis sich ein feiner Brei bildet, der das in Wasser unlösliche Chlorophyll in feinst verteilter, hochdisperser Form enthält. Dieser Brei wird anschließend mit 1000 g Wasser verdünnt, das entsprechend dem Wasser in Beispiel 1 vorzugsweise vorher mit einer Vorrichtung gemäß Fig. 1 behandelt wurde und bei Versuchen der Erfinder ebenfalls eine Abnahme der Schwere von 440 mg zeigte.

Das so hergestellte Getränk stellt ein Heilwasser hoher Wirksamkeit dar und kann beispielsweise mehrfach am Tag angewendet werden.

Die Heilwirkungen des Heilmittels gemäß Beispiel 3 entsprechen den in Beispiel 1 genannten Heilwirkungen.

### Beispiel 4:

250 g frisch gepflückte Brennesselblätter werden gedünstet und mit einem Turbomischer (Braun Miniprimer Compact MR300) zerkleinert, so daß sich ein feiner Brei ergibt. Dem Brei werden 20 g reines mikrokristallines Chlorophyll (im Arzneimittelhandel erhältlich) hinzugefügt. Danach wird der Brei mit dem Turbomischer gerührt, bis ein feiner homogener Brei entsteht, der das in Wasser unlösliche Chlorophyll in feinst verteilter hochdisperser Form enthält. Dieser Brei wird anschließend mit 1000 g Wasser verdünnt, das entsprechend den

Beispielen 1 und 3 behandelt wurde.

Das sich ergebende Produkt kann frisch hergestellt sowohl für die innere Einnahme, als auch für die äußere Anwendung verwendet werden.

Die Heilwirkungen des Heilmittels gemäß Beispiel 4 entsprechen den in Beispiel 1 genannten Heilwirkungen.

### Beispiel 5:

20 g reines mikrokristallines Chlorophyll (im Arzneimittelhandel erhältlich) werden zusammen mit einem frischen Eigelb und 250 g Wasser, das entsprechend den Beispielen 1 und 3 und 4 behandelt wurde, wobei sich eine Abnahme der Schwere von 110 mg zeigte) mit einem Turbomischer (Braun Miniprimer Compact, MR300) gerührt. Anschließend wurde tropfenweise kalt gepresstes Olivenöl zugegeben, bis eine Creme entsteht, die nach Belieben fester oder flüssiger hergestellt werden kann.

Die entstandene Creme wurde vorzugsweise für äußere Anwendungen eingesetzt, wo sie eine bisher nicht bekannte Heilkraft zeigt. Selbstverständlich kann die Creme auch innerlich angewendet werden.

Alternativ kann eine derartige Creme auch auf der Grundlage handelsüblicher Cremebestandteile hergestellt werden. Wichtig ist, daß die Creme erfindungsgemäß, vorzugsweise mit einer Vorrichtung gemäß Fig. 1 oder Fig. 2, behandeltes Wasser und Naturfarbstoff, vorzugsweise Chlorophyll, vorzugsweise in hoher Konzentration enthält.

Bei den oben genannten Beispielen ist es immer die Kombination zwischen dem mit der erfindungsgemäßen Vorrichtung behandelten Wasser, das eine Abnahme der Schwere von ca. 400 bis 500 mg/l zeigt, und Chlorophyll, das die bisher nicht bekannten Heileffekte zeigt.

Es ist beispielsweise auch möglich, den beiden Grundstoffen, d.h. beispielsweise erfindungsgemäß behandeltes Wasser und Chlorophyll, weitere Pflanzensäfte hinzuzufügen, um dadurch eine abwechslungsreiche kalte Diät herzustellen, bei der Gemüse, Früchte, Blätter und/oder Wurzeln der Grundmischung aus Chlorophyll und behandeltem Wasser zugefügt werden (siehe Beispiele 6 und 7).

### Beispiel 6:

200 g gekochte und wieder erkaltete rote Beete wird unter Zugabe von 200 g Wasser (behandelt entsprechend den Beispielen, 1, 3, 4 bzw. 5, wobei sich eine Gewichtsabnahme von ca. 90 mg zeigte) mit einem Turbomischer (Braun Miniprimer Compact MR300) zerkleinert, wobei sich ein roter dünnflüssiger Brei bildet. Anschließend werden zwei gehäufte Teelöffel reines mikrokristallines Chlorophyll (im Arzneimittelhandel erhältlich) dem Brei zugefügt, und das Ganze wird noch einmal mit dem Turbomischer behandelt. Anschließend wird der erhaltene Brei in ein Glasgefäß gefüllt und mit 1200 ml normalem Leitungswasser aufgefüllt. Das Gefäß wird hermetisch verschlossen und mit dem Inhalt auf die erfindungsgemäße Vorrichtung gemäß Fig. 1 gestellt. Nach 24 Stunden konnte man bei Versuchen der Erfinder eine Abnahme der Schwere um 250 mg beobachten.

Das erhaltene Getränk aus Wasser, Chlorophyll und Wurzelzellen ist ein überraschend gut wirkendes Heilmittel, das in dieser Form beispielsweise innerhalb eines Tages von einer erwachsenen Person getrunken werden kann.

### Beispiel 7:

200 g gekochte und (wieder) erkaltete Möhren werden unter Zugabe von 200 g Leitungswasser mittels eines Turbomischers (Braun Miniprimer Compact MR300) zerkleinert, so daß sich ein gelblicher flüssiger Brei ergibt. Anschließend wird ein gehäufter Eßlöffel mikrokristallines Chlorophyll (im Arzneimittelhandel erhältlich) zugefügt und das Ganze erneut mit dem Turbomischer behandelt. Dem erhaltenen Brei wird weiteres Leitungswasser bis zu einer Gesamtmenge von 1200 ml zugegeben. Der gesamte Vorgang kann bereits in einem Glasgefäß, das hermetisch verschließbar ist, erfolgen oder in dieses jetzt eingefüllt werden. Das Glasgefäß wird hermetisch verschlossen und für 12 Stunden auf eine erfindungsgemäße Vorrichtung beispielsweise gemäß Fig. 1 oder Fig. 2 gestellt. Dabei stellten die Erfinder bei Versuchen eine Abnahme des Gewichts um 280 mg fest.

Das erhaltene Getränk stellt ein überraschend stark wirkendes Heilmittel dar, das beispielsweise innerhalb eines Tages von einem erwachsenen Menschen eingenommen werden kann.

Für alle Beispiele gilt, daß es klar ist, daß Gemüse, Blätter, Wurzeln oder Gräser auch in völlig rohem Zustand verwendet werden können. In diesem Fall ist eine vorhergehende Reinigung vorzuziehen, um eine saubere, vorzugsweise sterile Zubereitung des Heilmittels zu ermöglichen.

Beliebige weitere Beispiele sind denkbar. Beispielsweise kann statt dem Wasser auch vorzugsweise Direktsaft oder Rotwein verwendet werden. Andere Säfte, die beispielsweise auch aus Konzentrat hergestellt sind, sind denkbar. Durch die Behandlung mit der erfindungsgemäßen Vorrichtung zeigen alle Flüssigkeiten, d.h. Wasser und andere trinkbare Flüssigkeiten, eine Gewichtsabnahme. Daß die Gewichtsabnahme nicht durch einen Verdunstungseffekt erklärbar ist, folgt aus der Tatsache, daß bei den vielen von den Erfindern durchgeführten Versuchen das Glasgefäß immer hermetisch verschlossen war.

Die erfindungsgemäße trinkbare Flüssigkeit, insbesondere in Form von Wasser eignet sich auch zur Bewässerung von Pflanzen. Bei Versuchen der Erfinder hat sich überraschenderweise herausgestellt, daß Pflanzen bei Bewässerung mit dem erfindungsgemäß behandeltem Wasser ein erheblich größeres Wachstum bei einer gleichzeitig geringeren Wurzelbildung zeigen. Die von den Erfindern durchgeführten Versuche, die dieses überraschende Ergebnis zeigen, werden im folgenden dargestellt:

### Versuch 1:

In zwei Plastikschalen wurde feine Blumenerde gefüllt und je drei Reihen Radieschensamen in die Erde gesteckt. Die eine Schale wurde mit normalem Leitungswasser begossen, während die andere Schale mit Leitungswasser begossen wurde, das vorher erfindungsgemäß mit einer Vorrichtung gemäß Fig. 1 behandelt wurde, wobei sich eine Gewichtsreduzierung in der oben genannten Größenordnung zeigte. In jeder Schale befand sich 420 g Erde, die jeweils mit 200 ml des jeweiligen Wassers durchtränkt wurde und bei gleichmäßiger Wärme nebeneinander unter einer Glasplatte stehengelassen wurde. Nach sechs Tagen zeigte sich bei der mit dem erfindungsgemäß behandelten Wasser begossenen Schale der erste sprießende Keimling. Nach weiteren zwei Tagen sprossen in der mit dem erfindungsgemäß behandelten Wasser begossenen Schale immer mehr Keimlinge. Bei der anderen, Schale mit dem normalen Leitungswasser zeigte sich nach zehn Tagen ein Keimling. Zu dieser Zeit wuchsen die Keimlinge in dem mit dem erfindungsgemäß behandelten Wasser begossenen Schale bereits 2 bis 3 cm hoch. Das belegt eindeutig, daß die Radieschen, die mit dem erfindungsgemäß behandelten Wasser begossen wurden, früher, schneller und intensiver wuchsen. Nach 14 Tagen wurden die kleinen Pflanzen aus der Erde gezogen und nach der jeweiligen Schale getrennt gewogen. Die Summe des Gewichts der mit normalem Leitungswasser gezogenen Pflanzen betrug 478 mg, während die mit dem erfindungsgemäß behandelten Wasser gezogenen Pflanzen zusammen ein Gewicht von 1184 mg aufwiesen. Daraus ergibt sich, daß Pflanzen, die statt mit normalem Leitungswasser mit erfindungsgemäß behandeltem Leitungswasser begossen werden, eine um den Faktor von ungefähr 2,5 gesteigerte biologische Aktivität aufweisen.

Die Erfinder haben auch die überraschende Beobachtung gemacht, daß erfindungsgemäß behandeltes Wasser mit Pflanzen keine Algenbildung aufweist, während das bei normalem Leitungswasser bereits nach sehr kurzer Zeit der Fall ist.

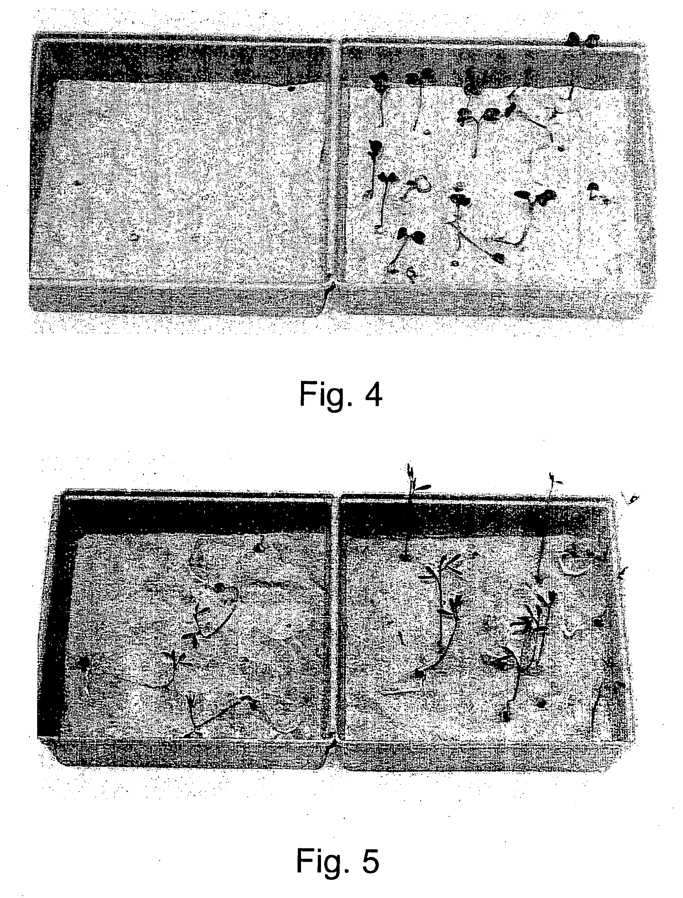

Die Figuren 4 bis 7 zeigen Ergebnisse weiterer Vergleichsversuche der Erfinder, bei denen Samen bzw. Pflanzen mit normalem Leitungswasser bzw. mit einer erfindungsgemäßen Vorrichtung gemäß Fig. 1 behandeltem Wasser begossen wurden.

### Versuch 2:

Fig. 4 zeigt das Ergebnis eines Vergleichsversuchs für eine Aussaat von Radieschen in Quarzsand. Eine Charge Radieschensamen wurden in zwei gleich große Mengen aufgeteilt. Quarzsand wurde ebenfalls in zwei gleich große Mengen aufgeteilt und in zwei identische Schalen eingebracht. Die Samen wurden in den Quarzsand eingebracht. Erfindungsgemäß mit einer Vorrichtung gemäß Fig. 1 behandeltes Leitungswasser wurde in die auf der rechten Seite von Fig. 4 gezeigte Schale eingebracht, so daß der Quarzsand durchtränkt war. Die linke Schale wurde mit der gleichen Menge normalem Leitungswasser durchtränkt. Während bei der auf der rechten Seite von Fig. 4 dargestellten Schale bereits nach drei Tagen zu sehen war, daß die Samen anfingen zu treiben, konnte man das bei der auf der linken Seite von Fig. 4 gezeigten Schale nach einem Zeitraum von 10 Tagen nicht erkennen. Nach 10 Tagen betrug die Wuchshöhe der mit dem erfindungsgemäß behandelten Wasser durchtränkten Keimlinge bereits 3 bis 4 cm.

### Versuch 3:

Fig. 5 zeigt das Ergebnis eines Vergleichsversuchs mit Linsen aus einem Bioladen (lens culinaris), die entsprechend dem in Fig. 4 gezeigten Versuch ausgesät wurden. Beide Versuche wurden parallel durchgeführt. Auch bei dem Vergleichsversuch mit den Linsen begann die Keimung der mit erfindungsgemäß behandeltem Wasser gegossenen Linsen bereits nach 4 Tagen, während die mit normalem Leitungswasser begossenen Linsen keine Keimung zeigten. Fig. 5 zeigt den Vergleich ebenfalls nach 10 Tagen. Es ist auffallend, daß bei den von den Erfindern durchgeführten Versuchen die mit dem erfindungsgemäß behandelten Wasser begossenen Pflanzen gerader und stärker als die mit normalen Leitungswasser begossenen Pflanzen waren.

### Versuch 4:

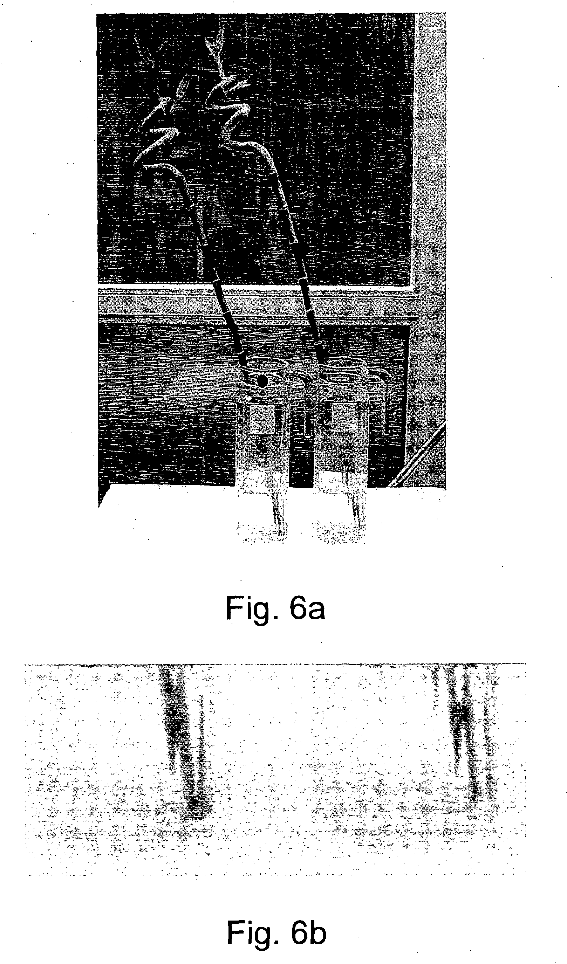

Die Figuren 6a und 6b zeigen das Ergebnis eines Vergleichsversuchs mit Bambuspflanzen, wobei Fig. 6b eine vergrößerte Teilansicht des Wurzelbereichs des in Fig. 6a gezeigten Versuchsergebnisses zeigt. Zwei identische Bambuspflanzen wurden ohne Trieb und ohne Wurzelbildung in zwei gleiche Glasbehälter gestellt. In dem in den Figuren 6a und 6b auf der linken Seite dargestellten Gefäß wurde erfindungsgemäß mit einer Vorrichtung gemäß Fig. 1 behandeltes Wasser gegossen, während in das in den Figuren 6a und 6b rechts dargestellte Gefäß eine entsprechende Menge normales Leitungswasser gegossen wurde. Die Figuren 6a und 6b zeigen den Zustand nach 28 Tagen. Die stärkeren Austriebe der Bambuspflanze auf der linken Seite (mit erfindungsgemäß behandeltem Wasser) sind deutlich zu erkennen. Die Erfinder haben beobachtet, daß nach 10 Tagen dort auch die Wurzelbildung begann, jedoch nur mit einem 1 cm langen Austrieb. Zu dieser Zeit war bei der auf der rechten Seite dargestellten Bambuspflanze (im normalen Leitungswasser) noch nichts zu sehen. Danach begann aber eine viel stärkere Wurzelbildung als bei der auf der linken Seite dargestellten Bambuspflanze, während der Austrieb bei der auf der rechten Seite dargestellten Pflanze schwächer war. Die Erfinder sind der Auffassung, daß die im normalem Leitungswasser stehende Pflanze das Bedürfnis hatte, viel Nahrung aufzunehmen, während die im erfindungsgemäß behandelten Wasser stehende Bambuspflanze eine wesentlich bessere Energieaufnahme hatte, weshalb weniger Wurzeln benötigt wurden. Die Wurzelbildung ist auch in den folgenden 18 Tagen, d.h. bis zu dem in den Figuren 6a und 6b gezeigten Zustand gleichgeblieben. Es zeigt sich, daß die Wurzelbildung bei der in den Figuren 6a und 6b rechts dargestellten in normalem Leitungswasser stehenden Bambuspflanze stärker ist, als bei der in den Figuren 6a und 6b links dargestellten in erfindungsgemäß behandeltem Wasser stehenden Bambuspflanze.

Die Erfinder haben auch beobachtet, daß bei der auf der rechten Seite der Figuren 6a und 6b gezeigten in normalem Leitungswasser stehenden Bambuspflanze eine starke Algenbildung erfolgte, während bei der auf der linken Seite der Figuren 6a und 6b dargestellten Bambuspflanze, die in erfindungsgemäß behandeltem Wasser stand, keine erkennbare Algenbildung beobachtet werden konnte. Die Algenbildung ist in den Figuren 6a und 6b wegen der Schwarzweißdarstellung nicht erkennbar.

Die Erfinder haben auch beobachtet, daß bei dem mit normalem Leitungswasser gefüllten Glasbehälter eine große Kalkabscheidung nach den 28 Tagen zu beobachten war, während bei dem mit erfindungsgemäß behandeltem Wasser gefülltem Glasbehälter nur eine sehr feine Kalkabscheidung nach den 28 Tagen zu sehen war.

### Versuch 5:

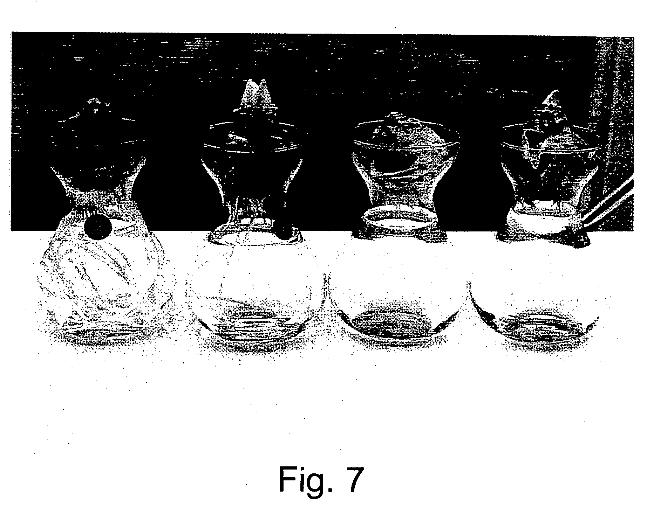

Fig. 7 zeigt das Ergebnis eines Vergleichsversuchs mit zwei Paaren aus jeweils einer rosa und einer blauen Hyazinthe. In den in Fig. 7 dargestellten Gläsern sind die Paare nebeneinander angeordnet. Es wurden jeweils links eine rosa und rechts eine blaue Hyazinthe im oberen Teil des Glases eingesetzt, wobei zwischen Zwiebel und der Oberfläche des Wassers ein Freiraum von 2 cm gelassen wurde. Die Gläser wurden in einen dunklen Keller gestellt und nach 14 Tagen besichtigt. Die in Fig. 7 links dargestellten Gläser (mit Punkt versehen) waren jeweils mit erfindungsgemäß mit einer Vorrichtung gemäß Fig. 1 behandelten Leitungswasser gefüllt, während die beiden rechten Gläser (ohne Punkt) mit einer gleichen Menge normalem Leitungswasser gefüllt waren. Es zeigt sich deutlich, daß die in Fig. 7 links dargestellten Zwiebeln (mit einem schwarzen Punkt auf dem Glas gekennzeichnet), die auf mit erfindungsgemäß mit einer Vorrichtung gemäß Fig. 1 behandeltem Wasser gefüllten Gläser augeordnet sind, eine Wurzelbildung ausgebildet haben, während die auf der rechten Seite von Fig. 7 dargestellten Zwiebeln, d.h. die auf den mit normalem Leitungswasser gefüllten Gläsern angeordneten Zwiebeln, keine in das Wasser reichende Wurzelbildung zeigten.

Die Erfinder sind der Auffassung, daß sich dieses überraschende Ergebnis dadurch erklären lassen könnte, daß das erfindungsgemäß behandelte Wasser im Gegensatz zu dem normalen Leitungswasser die Zwiebeln sogar über den Abstand von 2 cm anregen konnte, so daß eine Wurzelbildung erfolgen konnte.

Eine mögliche Erklärung für die Schwereänderung des erfindungsgemäß behandelten Wassers könnte gemäß der Auffassung der Erfinder beispielsweise darin bestehen, daß die erfindungsgemäße Vorrichtung (z.B. gemäß Fig. 1 bzw. Fig. 2) bei der Behandlung des Wassers dem Wasser über die Resonanz des Kristalls mit dem das Wasser einschließenden Glas und dann mit dem Wasser selbst Energie zuführt, so daß an Stelle einer unendlichen Kette der durch die Dipole des Wassers verbundenen Moleküle ein Cluster entsteht, d.h. eine Kugelform, in der ein Kalzium- oder Magnesiumion wie ein Zentralatom eingeschlossen ist. Diese Vermutung der Erfinder beruht auf der überraschenden Beobachtung der Erfinder, daß bei dem erfindungsgemäß behandelten Wasser keine grobe Kalkabscheidung zu beobachten ist, sondern am Glas nur ein sehr dünner durchsichtiger Film auftritt. Daraus schließen die Erfinder, daß die natürlichen im Leitungswasser immer vorhandenen Ionen eine Rolle bei der Verminderung des Gewichts des Wassers spielen können.

Eine alternative oder zuätzliche Erklärung der überraschenden Ergebnisse der Erfinder könnte auch in der Ausbildung von Dipolfasern liegen. Zu diesem Thema führt beispielsweise Hans Peter Dürr in "Rupert Sheldrake in der Diskussion", 1999 Scherz-Verlag, Bern, München auf Seite 247 aus:
Da die longitudinalen Oszillationen in den Biomolekülketten mit periodischen Ladungsverschiebungen verbunden sind, werden elektromagnetische Wellen mit gleicher Frequenz abgestrahlt. Der Vorgang hat dabei gewisse Ähnlichkeit mit dem supraleitenden Zustand, allerdings mit räumlich variierenden und oszillierenden Ladungsdichten, weshalb eine Abstrahlung auftritt. Die Wellenlängen des elektromagnetischen Strahlungsfeldes liegen hierbei im Zentimeter-/Millimeterbereich und oberhalb des Absorptionsbandes von Wasser von einigen Mikrometern (5 x 10¹³ Hertz). Sie können also den wasserhaltigen Organismus im wesentlichen ungeschwächt durchqueren und verlassen. Die Energien der Photonen dieser Wellen liegen bei nur einigen hundertstel Elektronenvolt, weshalb sie mit heutigen physikalischen Methoden kaum nachweisbar sind. Lebende Organismen könnten jedoch aufgrund ihrer körpereigenen, extrem monochromatischen Schwingungssysteme durchaus eine ausreichend hohe Empfindlichkeit für Photonen erreichen, um Signale in diesem Bereich noch wahrzunehmen. Dies hat Ähnlichkeiten mit Sheldrakes morphischer Resonanz. Ihre niedrigen Energien könnten erklären, warum diese Strahlung bisher noch nicht bemerkt wurde. Gegenteilige Erfahrungen von Fritz-Albert Popp und Mitarbeitern (Popp 1979, 1983; Popp, Li, Gu 1992) scheinen interessante Ansätze für eine Deutung in dieser Richtung zu liefern.

Die Erfinder haben die Auffassung, daß das erfindungsgemäß beispielsweise mit einer Vorrichtung gemäß Fig. 1 oder Fig. 2 behandelte Wasser (oder eine trinkbare Flüssigkeit), das die durch die Behandlung verbundene Abnahme der Schwere aufweist, in viel höherem Maß als normales Wasser biologisch aktiv ist. Das behandelte Wasser behält seine Verminderung der Schwere bei, welche gemäß Auffassung der Erfinder eine Strukturänderung bedeuten könnte, die physikalisch gesehen einem energetisch erregten Zustand entsprechen könnte, der in Resonanz zu einer im Raum vorkommenden longitudinalen Welle steht und damit vom Stand der Sonne abhängig sein könnte. Erfindungsgemäß wird durch das erfindungsgemäß behandelte Wasser eine neue Möglichkeit geschaffen, gesunde Zellen zu aktivieren und kranke Zellen besser zu regenerieren. Die Erfinder haben die Auffassung, daß das erfindungsgemäß behandelte Wasser insbesondere in Verbindung mit Chlorophyll ein hochwirksames Krebsmittel sein kann.

Die vorliegende Erfindung soll nicht durch die dargestellten Ausführungsbeispiele beschränkt werden, sondern Alternativen zu den dargestellten Lösungen und dem Fachmann angesichts der Beschreibung naheliegende Lösungen sollen in dem in den Ansprüchen definierten Schutzbereich der Erfindung umfaßt sein.

Als Nachweis der positiven Wirkungen von mit der erfindungemäßen Vorrichtung behandeltem Wasser auf den menschlichen Körper wird auf das folgende energiemedizinische Gutachten des Holistic DiagCenter, Gabriele Edelmann (Inhaberin), Dr. med. Manfred Doepp (Konsil. Arzt), Buchbichl 52, D-83737 Irschenberg, vom 12. September 2005 verwiesen. Das in dem Gutachten erwähnte Gerät "Dorina-Oszillator" ist eine erfindungsgemäße Vorrichtung gemäß Anspruch 1 und entspricht dem oben beschriebenen Ausführungsbeispiel gemäß Fig. 1. Die folgenden Bezugnahmen auf Dorina-Oszillator sollen daher als Bezugnahme auf die Vorrichtung von Fig. 1 gelten:

### Energiemedizinisches Gutachten über den "Dorina-Oscillator®"

Nachfolgend berichten wir über eine **Studie mit mehreren Testreihen,** beinhaltend Meridiandiagnostik (System Prognos®) und Segmentardiagnostik (System Amsat-HC®), bezüglich der biologisch-energetischen Wirkungen von Wässern, die mit einem Wasseraufbereitungsgerät mit Namen **"Dorina-Oscillator®"** behandelt worden waren.

In den Testungen wurden drei Ziele verfolgt:
1. Beurteilung der biologisch-energetischen Wirkungen mittels Meridiandiagnostik, beinhaltend zwei Fragestellungen (siehe Seite 5)
2. Beurteilung der biologisch-funktionellen Wirkungen mittels Segmentardiagnostik, beinhaltend zwei Fragestellungen (siehe Seite 5)
3. Statistische Auswertung und Prüfung aller Ergebnisse

### Probanden: 20 (zwanzig, randomisierte Auswahl)

### Geschlechtsverteilung: 9 männlich, 11 weiblich.

| | |
|---|---|
| Alter der Probanden: | Mittelwert = 47,2 Jahre, Standardabweichung = 16,3 |
| Alter der Frauen: | Mittelwert = 47,5 Jahre, Standardabweichung = 15,3 |
| Alter der Männer: | Mittelwert = 46,8 Jahre, Standardabweichung = 17,4 |

**Zeitraum der Untersuchungen**: August - September 2005

**Ort der Testreihen:** Holistic DiagCenter®, Irschenberg

### Produkt:

Das Gerät "Dorina-Oscillator®" von Dr. rer. nat. Schuster aus Prien erlaubt das Energetisieren von Wässern, die man dazu in einem vorgegebenen Glasgefäß für eine gewisse Zeit auf das Gerät zu stellen hat. Als Zeitdauer wurden 30 Minuten gewählt.

Es wurden zwei Wässer herangezogen: a) Leitungswasser aus einer Gemeinde in Oberbayern, b) Aqua destillata, erworben in einer Tankstelle (zum Zweck des Auffüllens von Autobatterien).

### METHODEN

### Meridiandiagnostik (System Prognos®)

Es handelt sich um Hautwiderstandsmessungen an 24 Meridianpunkten, mit Mittelwertbildung und Vergleich des neuen Mittelwerts mit dem des direkt vorangegangenen Tests als Veränderung des **Energiestatus.** Zusätzlich Berechnung der Änderung der Harmonie- bzw. des **Informationsstatus** als Reziprokwert der jeweiligen Streuung der 24 Werte. Es werden die Anfangs- bzw. Endpunkte (Ting-Punkte) der 12 klassischen TCM (traditionelle chinesische Medizin) verwendet, rechts und links = 24. Sie befinden sich neben den Eckfalzen der Finger- bzw. Fußnägel und sind somit nicht zu verfehlen.

Die zugrunde liegende Theorie besagt, dass der Mittelwert des Widerstands der 24 Meridiane dem Status des Chi entspricht, also der TCM-Auffassung der Lebensenergie (aus europäischer Sicht: der Leistungsreserve des Organismus). Da Widerstand und Chi indirekt proportional sind, wird der Ohm-Wert umgerechnet in seinen Reziprokwert, welcher der Leitfähigkeit entspricht und somit dem Chi direkt proportional ist.

Der von einer gerade abgelaufenen Messung zurückgelassene Wert stellt den Basiswert für die direkt darauf folgende nächste Messung dar, deren Veränderung in % angegeben wird. Anstiege des Leitwerts um mehr als 7 % gelten als Bejahung, Abfälle um mehr als 7 % als Verneinung, der Neutralbereich liegt somit zwischen + und - 7 %. Es ist somit ein trinär-quantitatives System.
Die Meridiandiagnostik arbeitet auf den Ebenen von Energie und Information (= Harmonie). Sie beinhaltet die vegetativen bzw. **autonomen Regulationen** der Körpersysteme. Die Summe von Energie und Information wird als dritter Parameter herangezogen, mit der Bezeichnung "Gesamtbilanz".

Die Meridiandiagnostik ist sensibel und daher für den **Medikamententest** gut geeignet. Dazu müssen die Mittel nicht eingenommen werden, sondern werden in die linke Hand gegeben. Dieses Verfahren heißt "virtuelle Therapiesimulation" und kann die Wirkung des Mittels bei einer folgenden Einnahme prognostizieren. Damit könnte die konventionell-medizinische Methode von "Versuch und Irrtum", die zu 25.000 arzneimittel-bedingten Todesfällen in Deutschland pro Jahr führt, abgeändert und verbessert werden im Sinne einer Individualisierung.

### Segmentardiagnostik (System Amsat-HC®)

Es handelt sich um **Volumenwiderstandsmessungen** über 6 flächige Hautelektroden und 22 Kanäle/Segmente, mit Mittelwertbildung und Vergleich des neuen Mittelwerts mit dem des direkt vorangegangenen Tests. Berechnung der Veränderung in %.

Während meridiandiagnostisch die Leitfähigkeiten der Meridiane gemessen werden, sind es hier anatomisch definierte Segmente des Körpers. Durch Überlagerungen der Segmente ergeben sich 67 differenzierbare Organe bzw. Strukturen des Körpers, deren Funktionsfähigkeiten quantitativ angegeben werden bezüglich ihrer Hyper- und Hypoabweichungen von der individuellen Norm. Die **Leitfähigkeit** entspricht der **Funktionsfähigkeit.**

Die Segmentardiagnostik arbeitet auf den Ebenen von **Soma/Physis** und **Psyche,** da die somatische Detektion vom Körper selbst im Sinne einer Psychosomatik bzw. "Somatopsychik" aufgebaut wird und die Stirnelektroden die Frontalhirne mit erfassen. Das Prinzip ist damit einerseits stabil und andererseits sensibel auch gegenüber Wellen und Strahlen aller Art. Beide angewandten Diagnose-Methoden ergänzen sich in idealer Weise. Es werden folgende Kriterien der Beurteilung unterschieden: 1) "Basis" = Funktionsstatus, 2) "Sol-Gel-Zustand" = Verhältnis der **Kolloide** im Mesenchym (Matrix, Grundsubstanz, aktives Bindegewebe), 3) die rechnerische Summe von beiden Werten = "Risiko".

Die Ergebnisse dieser Kriterien werden als Säulen- und Kreisdiagramme dargestellt, zusätzlich als **topographische Bilder** des Körpers und als Listen mit Zahlenwerten. Ein Vorteil ist das direkte Erkennen der Befunde bezüglich Ausmaß und Lokalisation, ohne ein Umdenken-müssen von Meridianen zu Organen bzw. zu deren Funktionen.

Anstiege des Leitfähigkeits-Mittelwerts um mehr als 1,8 % gelten bzgl. der Funktion als Bejahung, Abfälle um mehr als 1,8 % als Verneinung, der Neutralbereich liegt somit zwischen + und - 1,8 %. Somit ist es ein trinär-quantitatives System mit hoher Reproduzierbarkeit.

Zu beachten ist, dass nach den Experimenten der Entwickler der Segmentardiagnostik (Bergsmann, Pflaum, Schimmel, et al.) der menschliche Körper nicht einem technischen Widerstand gleich zu setzen ist. Der Organismus und bereits seine Hülle, die Haut, sind Leiter und Isolatoren bzw. Dielektrika zugleich, mit unterschiedlichsten Ionen als Ladungsträger, mit induktivem und kapazitivem Widerstand versehen. Deren Relationen ändern sich andauernd. Von daher sind Schlussfolgerungen von der Elektrotechnik auf den Körper schwerlich möglich und nur erlaubt, wenn intrakorporale Messungen (wie sie mittels Prognos® und Amsat-HC® stattfinden) diese bestätigen.

### Vorbereitung der Probanden:

Provokation mittels Laser-Pointer (30 sec auf den Punkt Gov. 20) oder puls. Magnetfeld (3 min.), anschließend Durchführung des "Entswitchens" zur Synchronisation des Gehirns. Die Begründung dafür ist, dass gegenwärtig im Zeitalter des Elektro-Smogs viele Menschen sich zeitweise oder andauernd im Zustand des "**Switching**" befinden, wodurch die Anteile des Gehirns dissoziiert, fragmentiert bzw. entsynchronisiert sind.

Dies bewirkt bei Testmethoden, die das Gehirn mit einbeziehen, falsche oder paradoxe Ergebnisse, da das Zentrale Nervensystem (wie auch z.B. das Immunsystem) als Folge der Widerstreite von Verstand (vor allem Großhirnrinde links) einerseits und Gefühlen und Affekten (z.B. Mittelhirn) andererseits nicht mehr beurteilen kann, was für den Menschen gut und was für ihn schädlich ist (Folgen sind z.B. Allergien und Autoaggressionen). Die Übung des Entswitchens bewirkt zumeist - nicht immer - eine Re-Synchronisation. Ohne Anwendung einer Synchronisationsmethode sind die Ergebnisse von Untersuchungen, die sich mit energetisch-informatorischen Wirkungen am biologischen Objekt Mensch befassen, nicht glaubwürdig. In der vorliegenden Studie konnten 5 der 50 Probanden (10% - entspricht dem Erfahrungswert) nicht re-sychronisiert werden, so dass die bei diesen Probanden auf energetisch-informatorischer Ebene vorgenommenen Meridianmessungen keine verwertbaren Testergebnisse ergaben.

### Verbindung und Codierung:

Die Tests fanden statt in Form von einfachen Blindversuchen. Zu diesem Zweck wurden vier 5 ml-Apothekenfläschchen mit vier verschiedenen Wässern gefüllt, dasselbe noch einmal zum Zweck des Trinkens.
Damit die Probanden nicht wissen konnten, um welche Wässer es sich handelte, wurden die Fläschchen wie folgt codiert:
- **A-H** :: Leitungswasser (s. o.), in die linke Hand
- **B-H** :: Leitungswasser nach 30 Min. auf dem Dorina-Gerät, linke Hand
- **C-H** :: Aqua dest., in die linke Hand
- **D-H** :: Aqua dest. nach 30 Min. auf dem Dorina-Gerät, linke Hand
- **A-T** :: wie A-H, jedoch mit Trinken der 5 ml
- **B-T** :: wie B-H, jedoch mit Trinken der 5 ml
- **C-T** :: wie C-H, jedoch mit Trinken der 5 ml
- **D-T** :: wie D-H, jedoch mit Trinken der 5 ml

### Thema 1 (20 Probanden):

1. Basismessung(en) der Meridiandiagnostik (System Prognos®)
2. Vorbereitung des Probanden, Kontrollmessung(en)
3. Test eines der vier H-Wässer, randomisierte Reihenfolge (linke Hand)
4. wie 3.
5. wie 3.
6. wie 3.
7. Trinken eines der 4 T-Wässer, randomisierte Reihenfolge
8. wie 7.
9. wie 7.
10. wie 7.

### Thema 2 (20 Probanden):

1. Basismessung(en) der Segmentardiagnostik (System Amsat-HC®)
2. Vorbereitung des Probanden, Kontrollmessung(en)
3. Test eines der vier H-Wässer, randomisierte Reihenfolge (linke Hand)
4. wie 3.
5. wie 3.
6. wie 3.
7. Trinken eines der 4 T-Wässer, randomisierte Reihenfolge
8. wie 7.
9. wie 7.
10. wie 7.

### ERGEBNISSE

### Thema 1 :

### Meridiandiagnostik:

### Codierung der Messungen in den Spalten der Tabellen:

| | |
|---|---|
| 1. Spalte | A-H |
| 2. Spalte | B-H |
| 3. Spalte | C-H |
| 4. Spalte | D-H |
| 5. Spalte | A-T |
| 6. Spalte | B-T |
| 7. Spalte | C-T |
| 8. Spalte | D-T |

### Anmerkungen zu den Tabellen:

*Energieveränderungen = Prozentuale Veränderung der Leitfähigkeit des Meridiannetzes im Vergleich zu der vorangegangenen Messung.*
*Informationsveränderungen = Prozentuale Veränderung des Reziprokwerts der Streuung der 24 Messwerte (auch Harmonie genannt) im Vergleich zu der vorangegangenen Messung (davon 1*/*3, um beide Parameter gleichmäßig zu wichten).*
*Gesamtbilanz = Energieveränderung + Informationsveränderung.*
*Blaue bzw. rote Zahlen: Kennzeichnung der jeweils 2 höchsten (rot) und 2 tiefsten (blau) Werte, zur Identifikation von "Ausreissern" und zur Berechnung der bereinigten Mittelwerte.*

*Die Reihenfolge der Messserien-Anteile 1-4 bzw. 5-8 wurde randomisiert, so dass keine Variante einen Vorteil besitzen konnte.*

**Tabelle 1**

| **Leitwert-** (= 1 / Widerstand) = **Energieveränderungen** | | | | | | | | |
|---|---|---|---|---|---|---|---|---|
| **Tests** | **A-H** | **B-H** | **C-H** | **D-H** | **A-T** | **B-T** | **C-T** | **D-T** |
| **Proband 1 (m, 59)** | - 7 | + 5 | -18 | +11 | 0 | - 3 | -14 | +10 |
| **Proband 2 (w, 52 )** | -12 | + 1 | - 7 | +12 | + 1 | - 3 | + 6 | + 1 |
| **Proband 3 (m, 45)** | -3 | + 6 | - 1 | +4 | -13 | +4 | +9 | +7 |
| **Proband 4 (w, 43)** | -7 | +13 | + 5 | - 2 | -9 | 0 | -18 | +9 |
| **Proband 5 (w, 74)** | -13 | +13 | -5 | +12 | + 6 | -9 | +4 | +8 |
| **Proband 6 (m, 10)** | - 7 | + 6 | - 4 | +7 | -21 | +5 | -18 | +9 |
| **Proband 7 (w, 51)** | - 6 | +8 | -1 | + 4 | -4 | +12 | -14 | - 1 |
| **Proband 8 (w, 27)** | -10 | - 2 | -11 | +11 | -4 | + 3 | + 2 | + 4 |
| **Proband 9 (w, 45)** | - 6 | +6 | -5 | -1 | - 6 | + 2 | -5 | +3 |
| **Proband 10 (m, 67)** | -9 | -10 | +2 | +16 | - 1 | + 7 | -9 | 0 |
| **Proband 11 (w, 50)** | -3 | -3 | -6 | + 1 | -4 | +4 | -8 | -5 |
| **Proband 12 (m, 65)** | -30 | + 2 | - 6 | + 4 | - 1 | + 2 | - 2 | + 6 |
| **Proband 13 (m, 52)** | + 4 | - 3 | - 6 | + 6 | - 4 | - 7 | + 3 | +11 |
| **Proband 14 (w, 23)** | -14 | + 6 | + 4 | + 6 | - 5 | +10 | - 8 | +13 |
| **Proband 15 (w, 46)** | -10 | + 2 | - 6 | + 8 | + 5 | + 7 | -12 | + 5 |
| **Proband 16 (w, 70)** | -5 | +13 | 0 | +10 | -20 | - 1 | -6 | +17 |
| **Proband 17 (m, 39)** | -22 | + 6 | 0 | + 9 | -16 | - 2 | + 9 | - 2 |
| **Proband 18 (w, 41)** | -15 | + 3 | - 1 | + 8 | -18 | +16 | 0 | + 7 |
| **Proband 19 (m, 37)** | + 3 | + 3 | - 4 | - 4 | + 1 | + 5 | - 8 | + 6 |
| **Proband 20 (m, 47)** | - 5 | - 1 | - 8 | + 9 | + 2 | + 5 | - 9 | 0 |
| **Mittelwert (alle)** | **-8,85** | **+3,70** | **-3,91** | **+6,55** | **-5,55** | **+2,85** | **-4,90** | **+5,41** |
| **Standardabweichung** | **7,76** | **5,86** | **5,27** | **5,18** | **8,11** | **6,12** | **8,43** | **5,49** |
| **Mittelwert (ohne Extreme)** | **-8,39** | **+3,94** | **-3,62** | **+6,61** | **-5,33** | **+2,78** | **-4,95** | **+5,33** |
| **Standardabweichung** | **5,57** | **4,71** | **3,82** | **4,26** | **7,18** | **4,84** | **7,61** | **4,40** |
| **Differenz (ohne Extreme)** | **+ 12,33** | | **+ 10,23** | | **+ 8,11** | | **+ 10,28** | |

### Statistische Auswertung der Tabelle 1:

Nach Student's t-Test bestehen folgende signifikanten Unterschiede:
*(Definition der Normalgruppe: Null +*/*-* 7 *% (Energie), Null +*/*- 5 % (Information), Null +*/*- 12* % *(Gesamtbilanz).*

| | | | | |
|---|---|---|---|---|
| Energieveränderungen | A-H | vs. | B-H: | p < 0,05 |
| Energieveränderungen | C-H | vs. | D-H: | p < 0,05 |
| Energieveränderungen | A-T | vs. | B-T: | p < 0,1 |
| Energieveränderungen | C-T | vs. | D-T: | p < 0,1 |

**Tabelle 2**

| **Harmonie-** (1 / Varianz) ≈ **Informationsveränderungen** | | | | | | | | |
|---|---|---|---|---|---|---|---|---|
| **Tests** | **A-H** | **B-H** | **C-H** | **D-H** | **A-T** | **B-T** | **C-T** | **D-T** |
| **Proband 1** | + 4 | + 5 | -16 | +13 | -14 | +5 | -13 | +15 |
| **Proband 2** | -27 | +11 | -16 | +15 | -12 | 0 | 0 | + 9 |
| **Proband 3** | -16 | + 8 | + 2 | + 1 | -18 | +11 | - 6 | + 7 |
| **Proband 4** | -18 | +16 | - 2 | + 2 | - 1 | + 2 | -21 | + 4 |
| **Proband 5** | -10 | + 4 | - 2 | + 7 | - 4 | 0 | - 4 | + 8 |
| **Proband 6** | - 5 | + 9 | - 4 | - 2 | - 3 | + 5 | - 5 | +14 |
| **Proband 7** | -1 | - 3 | +2 | +6 | -12 | +6 | -21 | + 8 |
| **Proband 8** | -11 | + 6 | -11 | + 8 | - 8 | + 1 | - 1 | + 8 |
| **Proband 9** | -10 | + 7 | - 5 | + 1 | - 4 | - 1 | - 6 | + 9 |
| **Proband 10** | -4 | -2 | -4 | +12 | + 5 | +6 | -13 | -1 |
| **Proband 11** | - 9 | + 6 | -11 | + 6 | -17 | + 7 | -16 | + 8 |
| **Proband 12** | -16 | - 4 | - 5 | +4 | - 1 | + 5 | - 6 | + 9 |
| **Proband 13** | -1 | + 5 | -11 | +6 | - 5 | - 8 | -13 | +15 |
| **Proband 14** | -10 | + 1 | -2 | + 1 | - 4 | + 8 | - 6 | + 9 |
| **Proband 15** | - 5 | + 8 | -15 | - 6 | - 2 | +7 | - 11 | + 6 |
| **Proband 16** | -7 | +12 | -2 | +3 | -15 | -9 | -3 | +12 |
| **Proband 17** | -18 | +10 | + 3 | +3 | -28 | +6 | +9 | + 2 |
| **Proband 18** | -10 | +8 | -5 | +6 | -14 | + 8 | +2 | 0 |
| **Proband 19** | - 2 | + 6 | - 8 | - 1 | - 4 | + 4 | - 13 | + 6 |
| **Proband 20** | 0 | + 9 | -12 | - 3 | - 6 | 0 | - 1 | + 6 |
| **Mittelwert (alle)** | **-8,80** | **+6,10** | **-6,21** | **+4,10** | **-8,35** | **+2,91** | **-7,40** | **+7,71** |
| **Standardabweichung** | **7,54** | **5,05** | **5,98** | **5,38** | **7,73** | **5,15** | **7,68** | **4,37** |
| **Mittelwert (ohne Extreme)** | **-8,50** | **+6,12** | **-6,17** | **+4,06** | **-8,00** | **+3,11** | **-7,56** | **+7,78** |
| **Standardabweichung** | **5,85** | **4,09** | **5,42** | **4,39** | **5,79** | **4,17** | **6,26** | **3,70** |
| **Differenz (ohne Extreme)** | **+ 14,62** | | **+ 10,23** | | **+ 11,11** | | **+ 15,34** | |

### Statistische Auswertung der Tabelle 2:

Nach Student's t-Test bestehen folgende signifikanten Unterschiede:

| | | | | |
|---|---|---|---|---|
| Informationsveränderungen | A-H | vs. | B-H: | p < 0,01 |
| Informationsveränderungen | C-H | vs. | D-H: | p < 0,05 |
| Informationsveränderungen | A-T | vs. | B-T: | p < 0,05 |
| Informationsveränderungen | C-T | vs. | D-T: | p < 0,01 |

**Tabelle 3**

| **Gesamtbilanzveränderungen** | | | | | | | | |
|---|---|---|---|---|---|---|---|---|
| **Tests** | **A-H** | **B-H** | **C-H** | **D-H** | **A-T** | **B-T** | **C-T** | **D-T** |
| **Proband 1** | - 3 | +10 | -34 | +24 | -14 | + 2 | -27 | +25 |
| **Proband 2** | -39 | +12 | -23 | +27 | -11 | - 3 | + 6 | +10 |
| **Proband 3** | -19 | +14 | + 1 | + 5 | -31 | +15 | + 3 | +14 |
| **Proband 4** | -25 | +29 | + 3 | 0 | -10 | + 2 | -39 | +13 |
| **Proband 5** | -23 | +17 | - 7 | +19 | + 2 | - 9 | 0 | +16 |
| **Proband 6** | -12 | +15 | - 8 | + 5 | -24 | + 5 | -23 | +17 |
| **Proband 7** | -7 | + 5 | +1 | +10 | -16 | +18 | -35 | +7 |
| **Proband 8** | -21 | +4 | -22 | +19 | -12 | + 4 | +1 | +12 |
| **Proband 9** | -16 | +13 | -10 | 0 | -10 | +1 | -11 | +12 |
| **Proband 10** | -13 | -12 | -2 | +28 | +4 | +13 | -22 | -1 |
| **Proband 11** . | -12 | + 3 | -17 | +7 | -21 | +11 | -24 | + 3 |
| **Proband 12** | -46 | -2 | -11 | +8 | -2 | +7 | -8 | +15 |
| **Proband 13** | + 3 | + 2 | -17 | +12 | - 9 | -15 | -10 | +26 |
| **Proband 14** | -24 | + 7 | + 2 | +7 | - 9 | +18 | -14 | +22 |
| **Proband 15** | -15 | +10 | -21 | + 2 | + 3 | +14 | -23 | +11 |
| **Proband 16** | -12 | +25 | - 2 | +13 | -35 | -10 | - 9 | +29 |
| **Proband 17** | -40 | +16 | +3 | +12 | -44 | +4 | +18 | 0 |
| **Proband 18** | -25 | +11 | - 6 | +14 | -32 | +24 | + 2 | +7 |
| **Proband 19** | + 1 | + 9 | -12 | - 5 | - 3 | + 9 | -21 | +12 |
| **Proband 20** | - 5 | + 8 | -20 | + 6 | - 4 | + 5 | -10 | + 6 |
| **Mittelwert (alle)** | **-17,65** | **+ 9,80** | **- 9,92** | **+ 10,65** | **- 13,90** | **+ 5,71** | **- 12,30** | **+ 13,12** |
| **Standardabweichung** | **7,59** | **5,57** | **5,63** | **5,29** | **7,94** | **5,88** | **8,15** | **4,93** |
| **Mittelwert (ohne Extreme)** | **- 16,89** | **+ 10,06** | **- 9,79** | **+ 10,67** | **-13,33** | **+ 5,89** | **- 12,51** | **+ 13,11** |
| **Standardabweichung** | **5,76** | **4,53** | **4,72** | **4,31** | **6,50** | **4,54** | **6,95** | **4,09** |
| **Differenz (ohne Extreme)** | **+ 26,95** | | **+ 20,46** | | **+ 19,22** | | **+ 25,62** | |

### Statistische Auswertung der Tabelle 3:

Nach Student's t-Test bestehen folgende signifikanten Unterschiede:

| | | | | |
|---|---|---|---|---|
| Gesamtbilanzveränderungen | A-H | vs. | B-H: | p < 0,005 |
| Gesamtbilanzveränderungen | C-H | vs. | D-H: | p < 0,005 |
| Gesamtbilanzveränderungen | A-T | vs. | B-T: | p < 0,01 |
| Gesamtbilanzveränderungen | C-T | vs. | D-T: | p < 0,005 |

### Zusammenfassung der Daten der Tabellen 1 - 3 (ohne Extreme = 18 Probanden)

**Tabelle 4**

| | **Mittelwerte der Varianten "vor"** | **Mittelwerte der Varianten "nach"** | **Signifikanz in Student's t-Test** |
|---|---|---|---|
| **Energie** | **- 5,57** | **+ 4,67** | **p < 0,05** |
| **Information** | **- 7,56** | **+ 5,27** | **p < 0,01** |
| **Gesamtbilanz** | **-13,13** | **+ 9,94** | **p < 0,005** |

### Interpretation der Ergebnisse der Tabellen 1 - 4:

**Zu A-H = virtuelle Testung des Leitungswassers ohne Behandlung**
Weit überwiegende Ablehnung, nach allen Kriterien.
**Zu B-H = virtuelle Testung des Leitungswassers mit Dorina-Behandlung**
Überwiegende Bejahung, vor allem von der Harmonie her.
**Vergleich von A-H und B-H**
Der Dorina-Oscillator® neutralisiert nicht nur die negativen Effekte, sondern wandelt sie in positive Wirkungen um. Diese betragen ca. ¾ der vorherigen Negativeffekte.

**Zu C-H = virtuelle Testung des Aqua dest. ohne Behandlung**
Überwiegende Ablehnung, vor allem von der Harmonie her, geringer als bei Leitungswasser.
**Zu D-H = virtuelle Testung des Aqua dest. mit Dorina-Oscillator®-Behandlung**
Überwiegende Bejahung, vor allem von der Energie her.
**Vergleich von C-H und D-H**
Der Dorina-Oscillator® neutralisiert nicht nur die negativen Effekte, sondern wandelt sie in positive Wirkungen um. Diese liegen höher als die vorherigen Negativeffekte.

**Zu A-T = reale Testung des Leitungswassers ohne Behandlung**
Überwiegende Ablehnung, nach allen Kriterien, geringer als bei virtueller Testung.
**Zu B-T = reale Testung des Leitungswassers mit Dorina-Oscillator®-Behandlung**
Überwiegende Bejahung, deutlich geringer als bei virtueller Testung.
**Vergleich von A-T und B-T**
Der Dorina-Oscillator® neutralisiert nicht nur die negativen Effekte, sondern wandelt sie teilweise in positive Wirkungen um. Diese betragen ca. 2/5 der vorherigen Negativeffekte.

**Zu C-T = reale Testung des Aqua dest. ohne Behandlung**
Überwiegende Ablehnung, gleichmäßig ausgeprägt, stärker als bei virtueller Testung.
**Zu D-T = reale Testung des Aqua dest. mit Dorina-Osciltator®-Behandlung**
Überwiegende Bejahung, gleichmäßig ausgeprägt, stärker als bei virtueller Testung.
**Vergleich von C-T und D-T**
Der Dorina-Oscillator® neutralisiert nicht nur die negativen Effekte, sondern wandelt sie in positive Wirkungen um. Diese liegen höher als die vorherigen Negativeffekte.

### Insgesamt

Beide Wässer werden primär sowohl energetisch als auch harmonikal abgelehnt. Beide Wässer werden nach der 'Dorina-Oscillator®-Behandlung' nicht nur toleriert oder akzeptiert, sondern bejaht. Die Unterschiede sind signifikant, z. T. hoch signifikant. Nach der Behandlung können die Wässer als heileffektiv bezeichnet werden.

### Thema 2:

### Segmentardiagnostik:

### Messungen der Versuchsbedingungen A vs. B bzw. C vs. D, mit den Veränderungen gegenüber der jeweils vorherigen Messung

**Tabelle 5**

| **Tests** | **Funktions-/Basisveränderung** | | **Sol-Gelveränderung** | | **Risikoveränderung** | |
|---|---|---|---|---|---|---|
| | **A-H** | **B-H** | **A-H** | **B-H** | **A-H** | **B-H** |
| **Proband 1** | - 2,0 | + 4,2 | - 0,2 | + 0,5 | - 2,2 | + 4,7 |
| **Proband 2** | -0,4 | + 0,9 | -0,1 | + 0,2 | -0,5 | + 1,1 |
| **Proband 3** | - 0,1 | + 2,1 | + 0,1 | + 0,4 | 0 | + 2,5 |
| **Proband 4** | - 3,8 | + 2,0 | - 0,5 | + 0,6 | - 4,3 | + 2,6 |
| **Proband 5** | - 2,1 | + 1,0 | - 0,5 | + 0,2 | - 2,6 | + 1,2 |
| **Proband 6** | - 2,9 | + 0,5 | - 0,7 | + 0,2 | - 3,6 | + 0,7 |
| **Proband 7** | - 0,8 | 0 | - 0,1 | 0 | - 0,9 | 0 |
| **Proband 8** | + 0,5 | + 4,1 | + 0,2 | + 0,7 | + 0,7 | + 4,8 |
| **Proband 9** | 0 | - 0,1 | 0 | 0 | 0 | - 0,1 |
| **Proband 10** | - 8,7 | + 0,6 | - 1,2 | + 0,2 | - 9,9 | + 0,8 |
| **Proband 11** | - 5,0 | + 1,2 | - 0,8 | + 0,4 | - 5,8 | + 1,6 |
| **Proband 12** | - 6,6 | + 0,2 | - 0,7 | + 0,1 | - 7,3 | + 0,3 |
| **Proband 13** | - 10,1 | 0 | - 1,4 | 0 | -11,5 | 0 |
| **Proband 14** | - 8,5 | + 2,8 | - 1,3 | + 0,6 | - 9,8 | + 3,4 |
| **Proband 15** | - 6,5 | + 8,4 | - 0,9 | + 1,9 | - 7,4 | + 10,3 |
| **Proband 16** | - 4,5 | + 3,0 | - 0,6 | + 0,5 | - 5,1 | + 3,5 |
| **Proband 17** | - 14,2 | + 6,0 | - 1,5 | + 0,9 | - 15,7 | + 6,9 |
| **Proband 18** | - 1,1 | + 5,1 | - 0,3 | + 0,9 | - 1,4 | + 6,0 |
| **Proband 19** | - 5,4 | +10,1 | - 0,9 | + 2,3 | - 6,3 | + 12,5 |
| **Proband 20** | + 1,7 | + 1,9 | + 0,3 | + 0,7 | + 2,0 | + 2,6 |
| **Mittelwert (alle)** | **- 4,02** | **+ 2,70** | **- 0,56** | **+ 0,57** | **- 4,58** | **+ 3,27** |
| **Standardabweichung** | **4,13** | **2,87** | **0,59** | **0,64** | **4,65** | **3,46** |
| **Mittelwert (ohne Extremwerte)** | **- 3,78** | **+ 2,44** | **- 0,55** | **+ 0,51** | **- 4,33** | **+ 2,95** |
| **Standardabweichung** | **3.32** | **2,34** | **0,51** | **0,47** | **3,78** | **2,75** |

### Statistische Auswertung der Tabelle 5:

Nach Student's t-Test bestehen folgende signifikanten Unterschiede:
*Definition der Normalgruppe: Null +*/*- 1,8 % (Funktion), Null +*/*- 0, 3 % (Sol-Gel), Null +*/*- 2,1 % (Risiko).*

| | | | | |
|---|---|---|---|---|
| Funktionsveränderungen | A-H | vs. | B-H: | p < 0,05 |
| Sol-Gel-Veränderungen | A-H | vs. | B-H: | p < 0,1 |
| Risikoveränderungen | A-H | vs. | B-H: | p < 0,01 |

**Tabelle 6**

| **Tests** | **Funktions-/Basisveränderung** | | **Sol-Gelveränderung** | | **Risikoveränderung** | |
|---|---|---|---|---|---|---|
| | C-H | D-H | C-H | D-H | C-H | D-H |
| **Proband 1** | - 0,1 | + 0,2 | 0 | 0 | - 0,1 | + 0,2 |
| **Proband 2** | - 1,0 | +2,2 | -0,3 | + 0,7 | - 1,3 | +2,9 |
| **Proband 3** | + 0,3 | +11,2 | + 0,1 | + 1,6 | + 0,4 | + 12,8 |
| **Proband 4** | 0 | + 0,9 | 0 | + 0,2 | 0 | + 1,1 |
| **Proband 5** | - 2,0 | + 3,1 | - 0,5 | + 0,6 | - 2,5 | + 3,7 |
| **Proband 6** | - 2,3 | + 2,9 | - 0,5 | + 0,4 | - 2,8 | + 3,3 |
| **Proband 7** | -6,9 | + 1,1 | - 1,0 | + 0,3 | -7,9 | + 1,4 |
| **Proband 8** | - 0,8 | + 1,1 | - 0,2 | + 0,5 | -1,0 | + 1,6 |
| **Proband 9** | - 1,9 | +6,0 | -0,2 | +0,7 | -2,1 | + 6,7 |
| **Proband 10** | +0,1 | +0,2 | 0 | -0,1 | +0,1 | +0,1 |
| **Proband 11** | - 1,4 | + 2,6 | - 0,4 | + 0,8 | - 1,8 | + 3,2 |
| **Proband 12** | -2,7 | + 0,1 | -0,5 | -0,1 | -3,2 | 0 |
| **Proband 13** | - 20,1 | + 27,3 | - 2,8 | + 4,5 | - 22,9 | + 31,8 |
| **Proband 14** | + 2,0 | + 3,1 | + 0,3 | + 0,5 | + 2,3 | + 3,6 |
| **Proband 15** | - 3,3 | + 0,2 | - 0,4 | + 0,1 | - 3,7 | + 0,3 |
| **Proband 16** | - 2,0 | + 0,3 | - 0,6 | - 0,1 | - 2,6 | + 0,2 |
| **Proband 17** | + 4,6 | + 6,2 | + 0,8 | + 1,1 | + 5,4 | + 7,3 |
| **Proband 18** | - 2,0 | + 3,3 | - 0,3 | + 0,7 | - 2,3 | + 4,0 |
| **Proband 19** | + 0,3 | + 7,5 | + 0,1 | + 0,9 | + 0,4 | + 8,4 |
| **Proband 20** | -8,7 | + 4,9 | - 1,1 | +0,6 | -9,8 | + 5,5 |
| **Mittelwert (alle)** | **- 2,39** | **+ 4,22** | **- 0,38** | **+ 0,69** | **- 2,77** | **+ 4,91** |
| **Standardabweichung** | **5,03** | **6,17** | **0,75** | **1,03** | **5,73** | **7,15** |
| **Mittelwert (ohne Extreme)** | **- 1,80** | **+ 3,17** | **- 0,31** | **+ 0,51** | **- 2,11** | **+ 3,68** |
| **Standardabweichung** | **2,57** | **3,01** | **0,36** | **0,45** | **2,92** | **3,40** |

### Statistische Auswertung der Tabelle 6:

Nach Student's t-Test bestehen folgende signifikanten Unterschiede:

| | | | | |
|---|---|---|---|---|
| Funktionsveränderungen | C-H | vs. | D-H: | p < 0,1 |
| Sol-Gel-Veränderungen | C-H | vs. | D-H: | nicht signifikant |
| Risikoveränderungen | C-H | vs. | D-H: | p < 0,05 |

**Tabelle 7**

| **Tests** | **Funktions-/Basisveränderung** | | **Sol-Gelveränderung** | | **Risikoveränderung** | |
|---|---|---|---|---|---|---|
| | **A-T** | **B-T** | **A-T** | **B-T** | **A-T** | **B-T** |
| **Proband 1** | +0,2 | + 1,7 | 0 | +0,3 | +0,2 | +2,0 |
| **Proband 2** | - 0,1 | + 0,5 | - 0,1 | + 0,2 | - 0,2 | + 0,7 |
| **Proband 3** | + 0,2 | - 2,7 | + 0,1 | - 0,4 | + 0,3 | - 3,1 |
| **Proband 4** | - 0,3 | + 2,9 | 0 | + 0,5 | - 0,3 | + 3,4 |
| **Proband 5** | - 1,1 | + 0,2 | - 0,3 | + 0,1 | - 1,4 | + 0,3 |
| **Proband 6** | - 1,1 | + 1,9 | - 0,4 | + 0,3 | - 1,5 | + 2,2 |
| **Proband 7** | - 1,3 | + 1,4 | - 0,4 | + 0,3 | -1,7 | + 1,7 |
| **Proband 8** | - 4,3 | + 0,2 | - 0,7 | + 0,1 | - 5,0 | + 0,3 |
| **Proband 9** | - 1,0 | - 0,9 | - 0,3 | - 0,2 | - 1,3 | - 1,1 |
| **Proband 10** | + 0,2 | + 2,4 | 0 | + 0,4 | + 0,2 | + 2,8 |
| **Proband 11** | - 2,1 | - 2,0 | - 0,5 | - 0,3 | - 2,6 | - 2,3 |
| **Proband 12** | + 0,2 | + 1,5 | + 0,1 | + 0,4 | +0,3 | + 1,9 |
| **Proband 13** | - 6,7 | + 3,3 | - 0,8 | + 0,5 | - 7,5 | + 3,8 |
| **Proband 14** | - 2,0 | + 3,1 | - 0,4 | + 0,6 | - 2,4 | + 3,7 |
| **Proband 15** | - 1,8 | + 0,2 | - 0,3 | 0 | - 2,1 | + 0,2 |
| **Proband 16** | - 2,4 | + 1,8 | - 0,6 | + 0,3 | - 3,0 | + 2,1 |
| **Proband 17** | - 8,9 | + 3,7 | -2,4 | +0,7 | -11,3 | + 4,4 |
| **Proband 18** | - 2,2 | + 1,9 | - 0,4 | + 0,3 | - 2,6 | + 2,2 |
| **Proband 19** | - 1,8 | + 3,3 | - 0,2 | + 0,8 | - 2,0 | + 4,1 |
| **Proband 20** | 0 | + 2,9 | 0 | + 0,6 | 0 | + 3,5 |
| **Mittelwert (alle)** | **-1,82** | **+ 1,37** | **- 0,34** | **+ 0,27** | **-2,16** | **+ 1,64** |
| **Standardabweichung** | **2,38** | **1,78** | **0,67** | **0,35** | **2,89** | **2,09** |
| **Mittelwert (ohne Extreme)** | **- 1,53** | **+ 1,46** | **- 0,27** | **+ 0,29** | **- 1,80** | **+ 1,75** |
| **Standardabweichung** | **1,75** | **1,50** | **0,29** | **0,31** | **1,96** | **1,77** |

### Statistische Auswertung der Tabelle 7:

Nach Student's t-Test bestehen folgende signifikanten Unterschiede:

| | | | | |
|---|---|---|---|---|
| Funktionsveränderungen | A-T | vs. | B-T: | p < 0,1 |
| Sol-Gel-Veränderungen | A-T . | vs | B-T: | p < 0,1 |
| Risikoveränderungen | A-T | vs. | B-T: | p < 0,05 |

**Tabelle 8**

| **Tests** | **Funktions-/Basisveränderung** | | **Sol-Gelveränderung** | | **Risikoveränderung** | |
|---|---|---|---|---|---|---|
| | **C-T** | **D-T** | **C-T** | **D-T** | **C-T** | **D-T** |
| **Proband 1** | -1,0 | +0,5 | -0,4 | +0,2 | -1,4 | + 0,7 |
| **Proband 2** | - 2,9 | + 0,2 | - 0,4 | 0 | - 3,3 | + 0,2 |
| **Proband 3** | - 0,5 | - 3.9 | - 0,1 | - 0,6 | - 0,6 | - 4,5 |
| **Proband 4** | + 0,2 | + 0,8 | + 0,1 | + 0,2 | + 0,3 | + 1,0 |
| **Proband 5** | - 4,7 | - 0,5 | - 0,5 | - 0,1 | - 5,2 | - 0,6 |
| **Proband 6** | - 0,6 | + 1,9 | - 0,2 | + 0,5 | - 0,8 | + 2,4 |
| **Proband 7** | + 0,2 | + 0,6 | 0 | + 0,2 | + 0,2 | + 0,8 |
| **Proband 8** | - 8,5 | + 0,3 | - 1,3 | 0 | - 9,8 | + 0,3 |
| **Proband 9** | - 3,6 | + 3.8 | - 0,5 | + 0,6 | - 4,1 | + 4,4 |
| **Proband 10** | +0,5 | + 1,0 | +0,2 | +0,3 | +0,7 | + 1,3 |
| **Proband 11** | - 3,0 | + 1,9 | - 0,6 | + 0,3 | - 3,6 | + 2,2 |
| **Proband 12** | + 0,8 | + 1,1 | + 0,2 | + 0,4 | + 1,0 | + 1,5 |
| **Proband 13** | - 10,4 | + 1,4 | - 2,4 | + 0,3 | - 12,6 | + 1,7 |
| **Proband 14** | + 1,9 | + 2,0 | + 0,6 | + 0,3 | + 2,5 | + 2,3 |
| **Proband 15** | - 3,1 | - 1,0 | - 0,8 | - 0,2 | - 3,9 | - 1,2 |
| **Proband 16** | - 0,3 | + 1,1 | - 0,1 | + 0,2 | - 0,4 | + 1,3 |
| **Proband 17** | - 3,7 | + 0,8 | - 0,4 | + 0,2 | - 4,1 | + 1,0 |
| **Proband 18** | + 0,2 | + 2,7 | + 0,1 | + 0,7 | + 0,3 | + 3,4 |
| **Proband 19** | + 0,2 | - 0,2 | 0 | 0 | + 0,2 | - 0,2 |
| **Proband 20** | - 4,8 | + 2,3 | - 0,8 | + 0,6 | - 5,6 | + 2,9 |
| **Mittelwert (alle)** | **- 2,16** | **+ 0,84** | **- 0,35** | **+ 0,19** | **- 2,51** | **+ 1,03** |
| **Standardabweichung** | **3,18** | **1,57** | **0,63** | **0,34** | **3,78** | **1,88** |
| **Mittelwert (ohne Extreme)** | **-1,92** | **+ 0,94** | **- 0,31** | **+ 0,21** | **- 2,23** | **+ 1,15** |
| **Standardabweichung** | **2,51** | **0,99** | **0,42** | **0,23** | **2,90** | **1,21** |

### Statistische Auswertung der Tabelle 8:

Nach Student's t-Test bestehen folgende signifikanten Unterschiede:

| | | | | |
|---|---|---|---|---|
| Funktionsveränderungen | C-T | vs. | D-T: | p<0,1 |
| Sol-Gel-Veränderungen | C-T | vs. | D-T: | nicht signifikant |
| Risikoveränderungen | C-T | vs. | D-T: | p<0,1 |

### Zusammenfassung der Daten der Tabellen 5 - 8 (ohne Extreme = 18 Probanden):

**Tabelle 9**

| | **Mittelwerte der Varianten vor Dorina** | **Mittelwerte der Varianten nach Dorina** | **Signifikanz in Student's t-Test** |
|---|---|---|---|
| **Funktion/Basis** | **- 2,37** | **+ 2,00** | **p < 0,1** |
| **Sol-Gel-Status** | **- 0,25** | **+ 0,38** | **n. s.** |
| **Risikograd** | **-2,62** | **+ 2,38** | **p < 0,05** |

### Interpretation der Ergebnisse der Tabellen 5 - 9:

**Zu A-H = virtuelle Testung des Leitungswassers ohne Behandlung**
Weit überwiegende Ablehnung, nach allen Kriterien.
**Zu B-H = virtuelle Testung des Leitungswassers mit Dorina-Oscillator®-Behandlung**
Überwiegende Bejahung, vor allem von der Harmonie her.
**Vergleich von A-H und B-H**
Der Dorina-Oscillator® neutralisiert nicht nur die negativen Effekte, sondern wandelt sie in positive Wirkungen um. Diese betragen ca. ¾ der vorherigen Negativeffekte.

**Zu C-H = virtuelle Testung des Aqua dest. ohne Behandlung**
Überwiegende Ablehnung, vor allem von der Harmonie her, geringer als bei Leitungswasser.
**Zu D-H = virtuelle Testung des Aqua dest. mit Dorina-Oscillator®-Behandlung**
Überwiegende Bejahung, vor allem von der Energie her.
**Vergleich von C-H und D-H**
Der Dorina-Oscillator® neutralisiert nicht nur die negativen Effekte, sondern wandelt sie in positive Wirkungen um. Diese liegen höher als die vorherigen Negativeffekte.

**Zu A-T = reale Testung des Leitungswassers ohne Behandlung**
Überwiegende Ablehnung, nach allen Kriterien, geringer als bei virtueller Testung.
**Zu B-T = reale Testung des Leitungswassers mit Dorina-Oscillator®-Behandlung**
Überwiegende Bejahung, deutlich geringer als bei virtueller Testung.
**Vergleich von A-T und B-T**
Der Dorina-Oscillator® neutralisiert nicht nur die negativen Effekte, sondern wandelt sie teilweise in positive Wirkungen um. Diese betragen ca. 2/5 der vorherigen Negativeffekte.

**Zu C-T = reale Testung des Aqua dest. ohne Behandlung**
Überwiegende Ablehnung, gleichmäßig ausgeprägt, stärker als bei virtueller Testung.
**Zu D-T = reale Testung des Aqua dest. mit Dorina-Oscillator®-Behandlung**
Überwiegende Bejahung, gleichmäßig ausgeprägt, stärker als bei virtueller Testung.
**Vergleich von C-T und D-T**
Der Dorina-Oscillator® neutralisiert nicht nur die negativen Effekte, sondern wandelt sie in positive Wirkungen um. Diese liegen höher als die vorherigen Negativeffekte.

### Insgesamt

Beide Wässer werden primär sowohl energetisch als auch harmonikal abgelehnt. Beide Wässer werden nach der Dorina-Oscillator®-Behandlung nicht nur toleriert oder akzeptiert, sondern bejaht. Die Unterschiede sind signifikant, z. T. hoch signifikant. Nach der Behandlung können die resultierenden Wässer als ,heilende' Wässer bezeichnet werden *(Anmerkung: das Wort ,Heilwasser' ist gesetzlich definiert und kann daher hier nicht angewendet werden).*

### Zusammenfassung der Mittelwerte aller untersuchten Varianten, mittels Meridian- und Segmentardiagnostik:

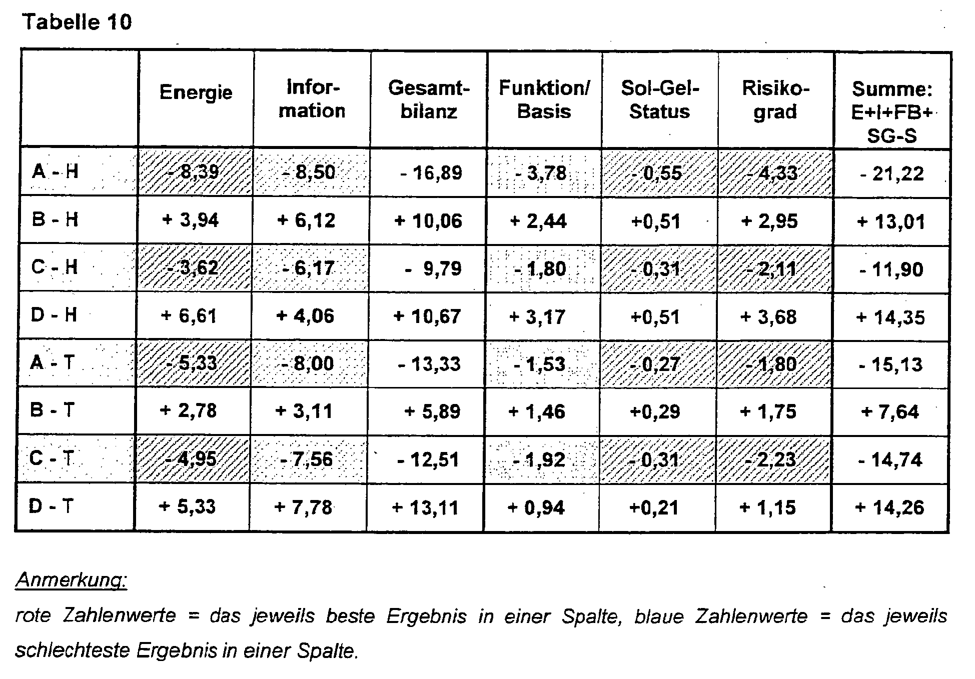

### Interpretation der Tabelle 10:

Es besteht in allen verwendeten Methoden Einigkeit darüber, dass
1. die beiden originalen Wässer negative biologische Wirkungen haben,
2. der **,Dorina-Oscillator**®**'** nach allen untersuchten Kriterien die Wässer verbessert,
3. die behandelten Wässer nahe so stark wirksam sind wie Nahrungsergänzungsmittel oder homöopathische, phytotherapeutische sowie (ausgewählte) allopathische Medikamente, die mit Hilfe des Medikamententests als individuell besonders geeignet identifiziert werden,
4. die behandelten Wässer mit ihren Effekten an der oberen Grenze des Neutralbereichs liegen: meridiandiagnostisch mit + 9,94 %, segmentardiagnostisch mit + 2,38,
5. das behandelte Aqua dest. im alleinigen Test die stärksten Effekte aufweist,
6. der Dorina-Oscillator® in der Lage ist, Ablehnungen der beiden z. T. schlecht verträglichen Wässer Leitungswasser und Aqua dest. umzuwandeln in Bejahungen,
7. diese Verbesserung eine Konversion ins Positive darstellt, die größenordnungsmäßig gleich stark ausgeprägt ist wie die vorherigen negativen Effekte,
8. kein wesentlicher Unterschied besteht zwischen virtuellen Tests (Mittel in der linken Hand) und realen Tests (Trunk von 5 ml).

Im Einzelnen
1. besteht in allen Methoden die stärkste Ablehnung gegenüber dem Leitungswasser,
2. besteht die stärkste Bejahung speziell in der Meridiandiagnostik gegenüber dem behandelten Aqua dest., identisch in virtuellem und realem Test,
3. liegt der Mittelwert aller Bejahungen bei 78 % des Mittelwerts aller Ablehnungen.

### DISKUSSION

### A: Allgemeines zu den Messmethoden und -situationen

### Zu 1. = Basismessung:

Die Basismessung ist für spätere Tests weitgehend irrelevant, da sie einen kompensierten Zustand darstellt, in dem der Körper seine Schwächen ausgleicht und verbirgt. Es bedarf einer Provokation, um den tatsächlichen Zustand hervor zu rufen bzw. den Status zu demaskieren.

### Zu 2. = Laser auf Gov. 20 als Provokation

Eine wirksame Provokation ist die Zufuhr einer spezifischen Information in Form von rotem Laserlicht (680 nm, < 0,5 mW), das von einem üblichen Laserpointer erzeugt wird. Dieses wird über den höchsten Punkt des Körpers eingegeben, der chinesisch als der Punkt des Totalen Yang bezeichnet wird. Von hier aus fließt die zugeführte Lichtenergie in das gesamte Netz der Meridiane weiter.

Bestehen keine Blockaden, so kann sich diese Energie frei verteilen und Defizite auffüllen, die Reaktion ist dann positiv (meist bei Gesunden). Bestehen Blockaden, so werden krankhafte, aber zunächst nicht sichtbare Befunde verstärkt, die Reaktion ist dann negativ.

Besteht eine Elektrosmog-Überempfindlichkeit, die sich nicht nur auf technische Wellen bis in den MHz/GHz-Bereich erstreckt, sondern auch auf Lichtwellen im THz-Bereich (insbesondere den UV-Anteil) bezieht, so findet sich eine Verschlechterung des Befundes. Pulsierende Magnetfelder werden üblicherweise begleitet von vagabundierenden elektrischen Feldern, die den Organismus belasten.

Der Körper befindet sich nach der Provokation in einem angeregten bzw. gestressten Zustand und wird nachfolgende Reize bzw. Fragen klarer beantworten.

### Zu 3. = Synchronisation

Bei Großstadtbewohnern findet sich heute als Folge des Elektrosmogs in ca. 30 % der Fälle der Zustand des "Switching", bei Landbewohnern seltener. Menschen ohne Mobilfunk (Handy oder DECT) in ihrer Nähe oder in Benutzung weisen nur (wie noch vor 5 Jahren allgemein) in ca. 5 % ein Switching auf.

Switching bedeutet, dass das Gehirn und seine Systeme (wie das Vegetativum oder die Meridiane) umgeschaltet sind und nicht mehr in der Lage sind, Positives als solches zu erkennen und zu bejahen und Negatives entsprechend abzulehnen. Die Reaktionen eines derart entsynchronisierten ZNS sind irrational bis paradox. Die Hauptursache dafür ist heute der technische Elektrosmog.

Die Synchronisation (Entswitchen) stellt eine Übung dar, mit welcher das ZNS wieder defragmentiert bzw. synchronisiert wird, so dass normale Reaktionen möglich werden. Im Anschluss daran befinden sich die Probanden zumeist (in ca. 90% der Fälle) in einem testfähigen Zustand. Dies wurde hier bestätigt gefunden: von 50 Probanden der Kurzzeit erwiesen sich 5 als permanent geswitcht, so dass sie in einer Parallelauswertung heraus genommen wurden.

### Zum Thema 1. (Meridiandiagnostik):

Seit der Existenz eines ubiquitären Elektrosmogs in den Ländern der sog. 1. Welt kann man davon ausgehen, dass die vegetativen bzw. autonomen Nervensysteme der Menschen labilisiert werden.

Dies kann bis zum Chaos führen, welches dann zumeist einher geht mit Gehirnproblemen wie Lateralitätsstörungen und Switching als Formen der Entsynchronisierung. Ein besonders problematischer Zustand ist als Folge eine Abhängigkeit bis hin zur Sucht, wobei der Organismus (ähnlich wie bei Alkohol, Nikotin, Drogen, ...) ohne das Agens nicht mehr existieren zu können glaubt. Es kommt bei solchen Personen (überwiegend Jugendliche) zu Entzugssymptomen bzw. -syndromen, wenn man ihnen den Elektrosmog entzieht.

In der das Vegetativum erheblich einbeziehenden Meridiandiagnostik sieht man in solchen Fällen eine Bejahung des Agens und eine Ablehnung von Schutzmaßnahmen, was sich aber nicht mehr nur auf den möglichen Auslöser des Elektrosmogs bezieht, sondern andere Einwirkungen mit einbezieht, wie z.B. das Bejahen von Giften oder Allergenen. Solche Personen meiden den Kontakt zur Natur, sie benötigen morgens "Uppers" wie Kaffee und abends "Downers" wie Alkoholika.

Die Meridiandiagnostik ist infolge ihrer Sensibilität für die Untersuchung dieser Phänomene auf den Menschen sehr geeignet.

### Zum Thema 2. (Segmentardiagnostik):

Die Segmentardiagnostik beinhaltet die Ebenen von Soma und Psyche. Damit ist diese Methode quantitativ weniger betroffen von strahlenden Einwirkungen, da diese sich primär bevorzugt auf den Ebenen der Energie und Information bzw. Harmonie abspielen. Umso wesentlicher ist es, wenn auch die Organfunktionen und das kolloidale Gleichgewicht im Mesenchym negativ auf eine Elektrosmog-Provokation und signifikant positiv auf die Karte K771 reagieren.

### Thema 3 (Synopsis):

Beide verwendeten Methoden arbeiten - wie oben ausgeführt - auf verschiedenen Ebenen der Ganzheit des Organismus. Von den zumeist postulierten sieben Ebenen des Menschen umfassen sie gemeinsam immerhin vier. Dabei kontrollieren und - gegebenenfalls - bestätigen sie sich gegenseitig.

Es existiert ein wissenschaftstheoretischer Grundsatz, dass zwei konventionellwissenschaftlich noch nicht anerkannte Methoden dann, wenn sie zu übereinstimmenden Ergebnissen kommen, ihre beidseitige Wertigkeit bestätigen. Dies ist hier der Fall.

### Zum Thema der Wirksamkeit einer energetisch-informatorischen Beeinflussung

Der 'Dorina-Oscillator®' ist trotz der Tatsache einer fehlenden Energiequelle in der Lage, die negativen Auswirkungen von Wässern auf den Körper nicht nur zu kompensieren, sondern sie zum überwiegenden Teil in positive Wirkungen zu transformieren. Dies ist nur erklärlich durch die Zuhilfenahme der physikalischen Theorie magnetischer Vektorpotentiale, auf die lebende biologische Objekte offenbar vom Prinzip her reagieren.

Die Wirkung solcher magnetischer Vektorpotentiale (MVP) ist im Vergleich zur Wirkung von Kraftfeldern nicht energetischer, sondern informatorischer Natur. Da die Wässer in allen vier gemessenen Ebenen (Energie, Information, Organfunktion, Psyche) ihre Effekte gleichermaßen ausüben, müssen Energie und Information in etwa parallel einwirken. Die Information ist dabei der Energie und darüber hinaus der Materie übergeordnet. Sie lässt sich aber bis heute nur indirekt an ihren Effekten nachweisen. Dabei steht der Mensch als Objekt im Vordergrund, da der Organismus als Ganzes über eine Vielzahl von Dipolen und anderen Sende- und Empfangsstrukturen verfügt, die in Resonanz gehen können.

Der menschliche Körper ist als Hohlraumresonator aufzufassen, dessen Haut sowohl gegenüber externen als auch internen Wellen als Reflektor dient. Nur dadurch können die Lebewesen auf der Erde trotz der immensen kosmischen Strahleneinwirkungen bis heute überleben: "skin effect". Da im Körperinneren eine Vielzahl von elektrischen Impulsprozessen stattfindet, die infolge ihrer Inkonstanz als Wellen abstrahlen, werden diese an der Innenhaut reflektiert und bilden als Folge der Interferenzen stehende Wellen ("Schwebungen"), deren Knoten als Meridiane imponieren. Demnach bildet das Körperinnere eine Ganzheit und reagiert entsprechend holistisch.

Ähnlich wie die Haut ein Dielektrikum darstellt, in dem Ladungsverschiebungen trotz eines äußerlich scheinbar ungeladenen Mediums stattfinden, was mit Polarisationen einhergeht, so dürfte der Aufbau des 'Dorina-Oscillator®' sich beschreiben lassen. Damit können die hier erhobenen Befunde erklärt werden.

Um dem Eindruck entgegen zu wirken, es handle sich um esoterische Auffassungen, wird hier verwiesen auf Inhalte in einem konventionell-wissenschaftlichen "Lexikon der Physik" (Verfasser: R. Knerr, Faktum Lexikon Institut, Bertelsmann Lexikon Verlag, Gütersloh/München, 2000), zu den Themen: *Potential* (spez. *Skalare Potentiale* und *Vektorpotential*), *Resonanz* und *Vektor.*

Drei Zitate daraus:

### 1. Zitat (Seite 499)

*"Die physikalische Deutung des Potentials ist die einer auf die ,Einheitsladung" normierten potentiellen Energie. Diese Deutung trifft auf sog. skalare Potentiale wie das elektrostatische Potential oder das Gravitationspotential zu.*"

### 2. Zitat (Seite 500)

*"Kraftfelder, die keine Quellen haben, bezeichnet man als quellenfrei. Alle ihre Kraftlinien sind aus diesem Grund in sich geschlossen (→ Magnetfeld). Derartige Felder kann man aber ebenfalls auf ein Potential zurückführen, das dann Vektorcharakter hat. Die Ableitung eines Vektorfeldes mag umständlich erscheinen, erhält ihren Sinn aber durch die Relativitätstheorie, in der das skalare Potential und das Vektorpotential zu einem Viererpotential verschmelzen.* "

### 3. Zitat (Seite 672)

*"Die Rotation ist ein Maß für in sich geschlossene Feldlinien, d.h. für Wirbel. Für quellenfreie Vektorfelder ist die Divergenz Null, für wirbelfreie ist die Rotation Null."*

Dies bedeutet, dass Untersuchungen mittels Messgeräten für Hertz'sche Wellen nicht zu einem positiven Ergebnis führen können, ja nicht einmal führen dürfen, da sie Null nicht nachweisen können. Dazu bedarf es Methoden, die Messungen der Auswirkungen auf biologische Objekte beinhalten, wie es hier der Fall ist.

Wer diese Erkenntnisse und die Möglichkeit ihrer Implementierung in diesem Fall anzweifelt, befindet sich nicht auf dem Stand der Physik seit ca. 1930 (siehe seinerzeitige Solvay-Symposien der Physiker aus aller Welt), sondern auf einem veralteten Stand, der als unwissenschaftlich bezeichnet werden muss.

### B: Spezielles

### Zu Leitungswasser ohne und mit Behandlung

Leitungswasser enthält bis auf wenige Ausnahmen heutzutage eine Vielzahl an metallischen und chemischen Inhaltsstoffen, die sich überwiegend nur dadurch auszeichnen, dass ihre Konzentrationen unterhalb festgelegter Grenzen liegen. Dies bedeutet jedoch keineswegs, dass der menschliche Organismus mit diesen Grenzwerten einverstanden ist, im Gegenteil zeigt ihre Veränderlichkeit, dass sie nur dem momentanen Stand der Wissenschaft (oder politischer Vorgaben) und keiner objektiven Erkenntnis entsprechen. Demgegenüber sind erregerbedingte Belastungen in den Hintergrund getreten.

Allein das Thema der biologisch nicht hinreichend abbaubaren Produkte von künstlichen Hormonen und Antibiotika im Trinkwasser wäre ein Skandal an sich. Es besteht durchaus der Verdacht, dass ein Teil der stark ansteigenden Zahlen von hormonabhängigen Tumoren (Prostata-Ca beim Mann und Mamma-Ca bei der Frau) durch sog. Umweltoestrogene bedingt ist. Dass sie darüber hinaus bestimmte Enzyme im Leberstoffwechsel stark beanspruchen, die zugleich Alkohol abbauen müssen und damit leicht überbelastet sind, sei nur nebenbei erwähnt.

Von daher ist es neben vielen weiteren Themen (Nitrat-Nitrit-Nitrosamine, etc.) kein Wunder, dass Leitungswasser eine starke Ablehnung erfährt. Dies geschieht virtuell noch stärker als bei dem konkreten Trunk, was dafür spricht, dass die interferierenden Negativinformationen in den Wasserclustern ohne Schleimhautkontakt vom Organismus deutlicher differenzierbar sind von den materiellen Stoffkonzentrationen im µg- oder ng-Bereich.

Durch das gleichzeitige stoffliche Vorhandensein von Schadstoffen im Leitungswasser dürfte es allerdings bedingt sein, dass die Relation zwischen Positiveffekt nach Behandlung und Negativeffekt vor Behandlung beim Leitungswasser deutlich schlechter gelegen ist als beim destillierten Wasser: Leitungswasser = 13,01/21,22 = 61,1% und 7,64/15,13 = 50,5% (zum Vergleich destilliertes Wasser: 14,35/11,90 = 120,5% und 14,26/14,74 = 96,7%). Da Schwermetalle oder Kohlenwasserstoffe nicht einfach komplett neutralisiert werden können, kann das 'Dorina-Leitungswasser' nicht den +100%-Konversionsbereich erreichen. Umso bemerkenswerter ist es jedoch, dass in nahezu allen Fällen eine Umwandlung ins Positive gelang.

### Zu Aqua dest. ohne und mit Behandlung

Das verwendete Aqua dest. wurde bewusst nicht aus einem Labor entnommen, sondern in einer Tankstelle in einem PE-Behälter gekauft. Dadurch ist gewährleistet, dass es zwar eine hohe Reinheit aufweist, aber vom Geschmack her unangenehm, nämlich mit einem metallischen Beigeschmack versehen ist. Der Sinn dieses Vorgehens lag darin, dass es vom Organismus nicht als ideale Möglichkeit angesehen werden sollte, sich über die Nieren zu entgiften (mit entsprechend primär-positiven Ergebnissen), sondern als Stress. Dies war auch der Fall.

Jedoch besteht gegenüber dem Leitungswasser der Vorteil, dass nur minimale Konzentrationen an Schadstoffe enthalten sein sollten. Dies zeigte sich zum einen in geringer ausgeprägten Negativwerten ohne Behandlung, und zum zweiten in höheren Positivwerten nach Behandlung. Dass es hier dem Leitungswasser nicht noch deutlicher überlegen sein konnte, dürfte darin begründet sein, dass es auch fast keine nützlichen Mineralstoffe und Spurenelemente enthält.

Führt man diesen Gedanken fort und stellt sich ein gutes Quellwasser vor, das primär positiv wirkt, so sollte der Effekt einer Behandlung mit dem 'Dorina-Oscillator®' außerordentlich sein.

### Zum Gerät 'Dorina-Oscillator®'

Wir haben den Dorina-Oscillator® während der Untersuchungen aus Anlass dieses Gutachtens auch im normalen Haushalt eingesetzt. Um für uns selbst eine Quasi-Objektivierung zu erhalten, haben wir ca. 30 Zimmerblumen und -pflanzen, die regelmäßig mit Leitungswasser gewässert wurden, ab einem bestimmten Zeitpunkt mit Dorina-Oscillator®-Leitungswasser gegossen. Es fanden sich nach einigen Tagen erhebliche Wachstumsvorgänge: Blätter vergrößerten sich auf die 5-fache Fläche, ältere Pflanzen wuchsen von neuem und seit Jahren nicht mehr mit Blüten versehene Blumen trieben nacheinander neue Blüten. Alles blüht, wächst und gedeiht.

Bei Probanden im Rahmen von Medikamententests durchgeführte virtuelle Tests der Fläschchen A-H und B-H ergab, dass Ablehnungen in den Fällen vorkamen, wo bereits a priori ein Energieüberschuss vorhanden war, während die Probanden mit Energiedefizit weit überwiegend A-H ablehnten und B-H bejahten.

### ZUSAMMENFASSUNG

1. Das untersuchte Gerät "Dorina-Oscillator®" *von Dr. rer. nat. D. Schuster* bewirkt bei der Behandlung von zwei Wässern eine erhebliche Verbesserung der energiemedizinisch-biologischen Kriterien Chi-Energie, Harmonie/information, Funktionsstatus und Sol-Gel-Zustand.
2. Das Ausmaß der positiven biologischen Wirkungen liegt im oberen Bereich dessen, was von Mitteln und Medikamenten her bekannt ist, die mittels Medikamententest durch Meridian- als auch durch Segmentardiagnostik jeweils individuell als geeignet für den Patienten ermittelt und indiziert bzw. verordnet werden.
3. Die 'Dorina-Oscillator®' weisen annähernd keine Versager auf, sie sind somit auch ohne spezielle Testung einsetzbar. Eine Kontraindikation besteht bei primärem Energieüberschuss wie z.B. bei Hyperthyreose oder Conn-Syndrom.
4. Die untersuchten Wässer Leitungswasser und Aqua dest. sind nach ihrer Behandlung in der Lage, die zuvor negativen Effekte umzuwandeln in biologischenergetisch positive Wirkungen. Dies gelingt überwiegend in ähnlichem Ausmaß wie die sonst ohne Verwendung der Aufbereitung eintretenden Negativeffekte. Die Wässer besitzen nach der Behandlung eine heileffektive Wirkung.
5. Es ist anzunehmen, dass der "Dorina-Oscillator®" substanz- und informationsmäßig wirkt, wobei eine Resonanzbeziehung zwischen dem kosmischen Hiritergrundfeld und der Eigenschwingung des Gerätes wahrscheinlich ist.

## Patentansprüche

1. Vorrichtung zur Behandlung von Getränken mit einer magnetisierten Grundplatte (1),
einer darüber angeordneten Isolierschicht (2),
einer,elektrisch leitenden Schicht (3),
einer darüber angeordneten Kristall- oder Gesteinsplatte (4) und einer darüber angeordneten elektrisch leitenden Anordnung (5) zur Aufnahme eines Flüssigkeitsgefäßes,
wobei die magnetisierte Grundplatte (1) und die elektrisch leitende Anordnung (5) miteinander elektrisch leitend verbunden sind.

2. Vorrichtung nach Anspruch 1, bei der die magnetisierte Grundplatte eine Stahlplatte oder eine Platte aus geglühtem Eisen umfaßt.

3. Vorrichtung nach einem der vorhergehenden Ansprüche, **dadurch gekennzeichnet, daß** die magnetisierte Grundplatte durch einen elektrischen Strom ferromagnetisch gemacht wird.

4. Vorrichtung nach einem der vorhergehenden Ansprüche, bei der die magnetisierte Grundplatte durch einen oder mehrere ferromagnetische Dauermagneten und/oder selten Erdmagnete magnetisiert wird.

5. Vorrichtung nach Anspruch 4, bei der die Magnete eine Magnetfeldstärke von 1 bis 1000 Tesla, vorzugsweise von 50 bis 500 Tesla und insbesondere ungefähr 200 Tesla, aufweisen.

6. Vorrichtung nach einem der vorhergehenden Ansprüche, bei der die Isolierschicht eine dünne elektrisch hochisolierende Schicht ist, die auf der Oberseite der magnetisierten Grundplatte (1) durch Verkleben, Aufschrumpfen, Aufdampfen oder auf eine andere dem Fachmann bekannte Weise aufgebracht ist.

7. Vorrichtung nach einem der vorhergehenden Ansprüche, bei der die Isolierschicht (2) eine auf die magnetisierte Grundplatte (1) aufgetragene Isolierlackschicht umfaßt.

8. Vorrichtung nach einem der vorhergehenden Ansprüche, bei der die Isolationsschicht (2) Glas, Keramik, Porzellan, Polyethylen, Polypropylen, Fluorkunststoff und/oder weitere elektrisch isolierende Materialien umfaßt.

9. Vorrichtung nach einem der vorhergehenden Ansprüche, bei der die Isolierschicht einen Dickenbereich von 100 nm bis 2 mm, vorzugsweise ungefähr 1 mm, umfaßt.

10. Vorrichtung nach einem der vorhergehenden Ansprüche, bei der die elektrisch leitende Schicht (3) ein Metallgewebenetz umfaßt.

11. Vorrichtung nach einem der vorhergehenden Ansprüche, bei der die elektrisch leitende Schicht ein Kupfergewebenetz, Nickelgewebenetz, Silbergewebenetz und/oder Goldgewebenetz umfaßt.

12. Vorrichtung nach einem der vorhergehenden Ansprüche, bei der die elektrisch leitende Schicht ein Gewebenetz, vorzugsweise aus nicht-rostendem Stahl, Nickel, Eisen oder einem anderen Metall, umfaßt, das mit einem elektrischen Leiter beschichtet ist, beispielsweise verkupfert, versilbert oder vergoldet.

13. Vorrichtung nach einem der vorhergehenden Ansprüche, bei der die elektrisch leitende Schicht (3) ein Gewebenetz mit Drähten von 0,1 bis 2 mm Dicke und einer Maschenweite von 0,1 bis 5 mm, umfaßt.

14. Vorrichtung nach einem der vorhergehenden Ansprüche, bei der die elektrisch leitende Schicht (3) ein Gewebenetz mit Drähten von ungefähr 0,2 mm Dicke und einer Maschenweite von 1 mm umfaßt.

15. Vorrichtung nach einem der vorhergehenden Ansprüche, bei der die Kristall- oder Gesteinsplatte (4) Quarz, Glas, Keramik, insbesondere Al₂O₃-Keramik, Granit, Marmor, natürlich vorkommender Kalkgestein, Serpentin, Serpentenit, Chlorit, Granit oder ähnlichen Materialien umfaßt.

16. Vorrichtung nach einem der vorhergehenden Ansprüche, bei der die Kristall- oder Gesteinsplatte (4) eine Dicke von 5 bis 35 mm und vorzugsweise von ungefähr 15 bis 30 mm umfaßt.

17. Vorrichtung nach einem der vorhergehenden Ansprüche, bei der die magnetisierte Grundplatte eine Dicke von 5 bis 20 mm, vorzugsweise von ungefähr 10 mm, aufweist.

18. Vorrichtung nach einem der vorhergehenden Ansprüche, bei der die Isolierschicht Polyethylen, Polypropylen oder Kapton oder andere isolierende Materialien umfaßt.

19. Vorrichtung nach einem der vorhergehenden Ansprüche, bei der die Isolierschicht eine Stärke von ungefähr 0,01 bis 0,1 mm aufweist.

20. Vorrichtung nach einem der vorhergehenden Ansprüche, bei der die Isolierschicht an der Oberseite und den Seitenwänden der magnetisierten Grundplatte (1) angeordnet ist.

21. Vorrichtung nach einem der vorhergehenden Ansprüche, bei der die elektrisch leitende Anordnung (5; 5') ein Metallgewebenetz umfaßt.

22. Vorrichtung nach einem der vorhergehenden Ansprüche, bei der die elektrisch leitende Anordnung ein Kupfergewebenetz, Nickelgewebenetz, Silbergewebenetz und/oder Goldgewebenetz umfaßt.

23. Vorrichtung nach einem der vorhergehenden Ansprüche, bei der die elektrisch leitende Anordnung ein Gewebenetz, vorzugsweise aus nicht-rostendem Stahl, Nickel, Eisen oder einem anderen Metall, umfaßt, das mit einem elektrischen Leiter beschichtet ist, beispielsweise verkupfert, versilbert oder vergoldet.

24. Vorrichtung nach einem der vorhergehenden Ansprüche, bei der die elektrisch leitende Anordnung (5; 5') ein Gewebenetz mit Drähten von 0,1 bis 2 mm Dicke und einer Maschenweite von 0,1 bis 5 mm, umfaßt.

25. Vorrichtung nach einem der vorhergehenden Ansprüche, bei der die elektrisch leitende Anordnung (5; 5') ein Gewebenetz mit Drähten von ungefähr 0,2 mm Dicke und einer Maschenweite von 1 mm umfaßt.

26. Vorrichtung nach einem der vorhergehenden Ansprüche, bei der die elektrisch leitende Anordnung (5) unter dem Gefäß (7) für die zu behandelnde trinkbare Flüssigkeit angeordnet ist.

27. Vorrichtung nach einem der vorhergehenden Ansprüche, bei der die elektrisch leitende Anordnung (5') einen Gewebemantel umfaßt, der um das Gefäß (7) für die zu behandelnde trinkbare Flüssigkeit angeordnet ist.

28. Vorrichtung nach einem der vorhergehenden Ansprüche, bei der die elektrische Verbindung zwischen der magnetisierten Grundplatte (1) und der elektrisch leitenden Anordnung (5; 5') einen elektrischen Leiter (6) umfaßt.

29. Vorrichtung nach Anspruch 28, bei der der elektrische Leiter ein Kupferkabel von ungefähr 0,1 mm bis 5 mm, vorzugsweise ungefähr 1mm Querschnitt umfaßt, wobei der elektrische Leiter vorzugsweise eine Isolierung umfaßt.

30. Vorrichtung nach einem der vorhergehenden Ansprüche, bei der das Gefäß (7) für die zu behandelnde trinkbare Flüssigkeit mundgeblasenes Glas, Alkalisilikat, Borsilikat, Hartkunststoff und/oder Polykarbonat oder ähnliche Materialien umfaßt.

31. Vorrichtung nach einem der vorhergehenden Ansprüche, bei der das Gefäß (7) für die zu behandelnde trinkbare Flüssigkeit eine Wandstärke von ungefähr 1 bis 5 mm, vorzugsweise von ungefähr 2,5 mm, umfaßt.

32. Verfahren zur Behandlung von Flüssigkeiten mit einer Vorrichtung nach einem der vorhergehenden Ansprüche.

33. Verfahren nach Anspruch 32, bei dem die zu behandelnde Flüssigkeit Trinkwasser, Wein oder ein anderes wasserhaltiges Getränk ist.

34. Trinkbare Flüssigkeit, hergestellt nach einem der vorhergehenden Verfahrensansprüche.

35. Heilmittel mit einer trinkbaren Flüssigkeit nach Anspruch 34.

36. Heilmittel nach Anspruch 35, desweiteren mit einem Naturfarbstoff.

37. Heilmittel nach Anspruch 36, wobei der Naturfarbstoff ein pflanzlicher Naturfarbstoff ist, insbesondere Chlorophyll, Karotin und/oder der Farbstoff roter Beete.

38. Heilmittel nach Anspruch 37, wobei das Chlorophyll ein Bestandteil eines Planzenextrakts, vorzugsweise von Spinat oder Algen, ein Bestandteil zerkleinerten Gemüses, vorzugsweise Spinat, und/oder industriell hergestelltes Chlorophyll ist.

39. Heilmittel nach Anspruch 36, bei dem der Naturfarbstoff ein tierischer Farbstoff ist, insbesondere Hämoglobin oder der Farbstoff der Purpurschnecke.

40. Heilmittel nach einem der Ansprüche 35 bis 39 zur Behandlung von Krebs.

41. Verwendung einer trinkbaren Flüssigkeit nach Anspruch 34 zur Herstellung eines Heilmittels, insbesondere nach einem der Ansprüche 35 bis 40.

42. Verwendung einer trinkbaren Flüssigkeit nach Anspruch 34 zur Bewässerung von Pflanzen.

43. Verwendung nach Anspruch 42, wobei die trinkbaren Flüssigkeit Wasser ist.

44. Verwendung nach Anspruch 42 oder 43, zur Bewässerung von Grasboden (Rasen) in Fußballstadien, insbesondere in halbgeschlossenen oder geschlossenen Fußballstadien, oder anderen Stadien mit Grasboden.
